# EUROPEAN PATENT APPLICATION

(11) **EP 4 789 762 A2**
(43) Date of publication of application: **12.08.2026**
(21) Application number: 25224176.5
(22) Date of filing: 17.12.2025
(51) Int. Cl.: B01L 3/00, B01L 9/00

(54) **BIOSENSOR SYSTEM AND METHOD OF CONTROLLING SAME**

(30) Priority: 21.01.2025 WO PCT/KR2025/001165
(71) Applicant: LG Electronics Inc., Yeongdeungpo-gu Seoul 07336 (KR)
(72) Inventor: LIM, Kyoungtaek, 06772 Seoul (KR); CHOI, Taekyu, 06772 Seoul (KR); KIM, Changseok, 06772 Seoul (KR)
(74) Representative: Vossius & Partner Patentanwälte Rechtsanwälte mbB

(57) **Abstract**

Proposed is a method of controlling a biosensor system. The method includes a shaft alignment step of aligning an actuator shaft of a valve actuator, which rotates a valve unit provided in the biosensor cartridge, and an actuator shaft of a pump actuator, which rotates a pump unit, to initial positions, a loading step of moving down the valve actuator and the pump actuator when the biosensor cartridge is inserted, and a diagnosing step of sensing the bio-substance by rotating the valve unit and the pump unit. Accordingly, there is an advantage that it is possible to automatically diagnose a bio-substance through a simple process of inserting the biosensor cartridge into the diagnostic device.

## Description

### Technical Field

The present disclosure relates to a biosensor, a biosensor system, and a method of controlling the biosensor system. In more detail, the present disclosure relates to a biosensor system that diagnoses a bio-substance by detecting a biological substance, generating an electrical signal, and sensing the electrical signal, and a method of controlling the biosensor system.

### Description of the Related Art

As science and technology continue to advance and interest in quality of life grows, the importance of disease diagnosis and prevention, as well as food and environmental safety, continues to increase in human life. As a result, the need for measuring the concentration of organic or inorganic substances in samples has been increasing for diagnosing human diseases, for specific processes in the fields of food chemistry and industrial chemistry, or for analyzing pollutants in the environmental field, and many efforts have been made to meet this need.

A biosensor is a device that measures concentration by combining biological substances such as enzymes, microorganisms, antibodies, receptors, and DNA probes with an electrical or physicochemical transducer, and sensing electroactive substances or physical changes generated from reactions with an analyte through signals using methods such as electrochemical, optical, thermal, or piezoelectric mechanisms.

In general, detection of biological substances using a biosensor is performed through a combination of complex processes such as filtering, metering, mixing, transport, reaction, and washing. Accordingly, in the related art, detection of biological substances is conducted manually at the laboratory level using a variety of equipment.

Accordingly, as biosensor technology advances, simultaneous development of fluid handling technology for automating and standardizing a diagnostic process can be said to be highly important for low-cost and high-efficiency diagnostics.

Among these, the equipment for detecting biological substances needs to clean the flow paths inside the equipment before measuring each biological sample. Further, in order to diagnose multiple samples, a large volume of buffer solution must be stored in a tank, which raises concerns about deterioration, and there is the inconvenience of periodically disposing of a waste solution after diagnosis. When using such equipment, there is a limitation in that the diagnostic speed may decrease when it is required to diagnose a large number of samples, and the accuracy may also be deteriorated.

In order to solve these problems, a disposable biosensor cartridge with internal flow paths for the flow of a buffer solution and a sample solution may be used. Since disposable biosensor cartridges are used only once, a separate cleaning process is unnecessary. Further, since each cartridge is provided with a single-use buffer solution, there is no risk of buffer solution degradation and an advantage is that when a cartridge is discarded, a waste solution is also disposed of.

In this regard, an on-site molecular diagnostic system has been disclosed in Korean Patent Application Publication No. KR 10-2022-0047600A.

The on-site molecular diagnostic system includes a cartridge and a diagnostic device and a biological sample can be accommodated in the cartridge and then inserted into the diagnostic device to undergo various sample processing steps.

The on-site molecular diagnostic system is configured such that the cartridge is inserted into the diagnostic device in an upright position.

Further, when a pneumatic device is provided to induce a buffer solution or a sample solution to flow and a cartridge is inserted, the buffer solution or the sample solution is induced to flow by supplying pneumatic pressure into the cartridge.

However, when the cartridge is inserted in a direction perpendicular to the ground, as described above, a buffer solution or a sample solution may flow due to gravity, so there is a limitation in that precise control may not be possible due to the flow of the buffer solution or the sample solution regardless of the operation of the diagnostic device.

Further, since the diagnostic device needs to be equipped with a pneumatic device with a relatively large volume, the volume of the diagnostic device may be increased, which may cause inconvenience when transporting the diagnostic device to a required diagnostic site or installing it on-site.

Further, since it is difficult to finely control the output of pneumatic devices, it is difficult to control the flow rate and the flow velocity of a buffer solution or a sample solution flowing in the cartridge, so there is a limitation in that accuracy is deteriorated due to errors in diagnostic data.

### SUMMARY

The present disclosure has been made in an effort to solve the problems described above and an objective of the present disclosure is to provide a biosensor cartridge that enables a user to easily diagnose bio-substances through a simple process.

Further, another objective of the present disclosure is to provide a biosensor cartridge that can easily diagnose bio-substances at required diagnostic sites without a spatial limitation.

Further, another objective of the present disclosure is to provide a biosensor cartridge that can be easily transported to required diagnostic sites and can perform diagnosis without a spatial limitation because a diagnostic device is configured in a compact size.

Further, another objective of the present disclosure is to provide a biosensor cartridge that can stably control the flow rate and the flow velocity of a buffer solution or a sample solution flowing in the cartridge.

Further, another objective of the present disclosure is to provide a biosensor cartridge that can prevent deterioration of accuracy in sensing due to non-uniform flow velocities of solutions in diagnostic biosensor cartridges.

Further, another objective of the present disclosure is to provide a biosensor cartridge that can stably maintain flow of a buffer solution or a sample solution while allowing miniaturization of a biosensor and can stably transmit electrical signals.

Further, another objective of the present disclosure is to provide a biosensor cartridge that allows only a biosensor to be easily replaced without disassembling the entire cartridge in the event of a defect in the biosensor.

Further, another objective of the present disclosure is to provide a biosensor cartridge that allows easy injection of a buffer solution and can prevent contamination of the buffer solution.

Further, another objective of the present disclosure is to provide a biosensor cartridge that allows a buffer solution of a sample solution to naturally flow to a biosensor through only a simple process of insertion into a diagnostic device and that can sense bio-substances through the biosensor.

In order to achieve the objectives described above, a biosensor system according to the present disclosure includes: a biosensor cartridge comprising a frame disposed in a housing, a channel formed in the frame and configured to provide a path for flow of a buffer solution or a sample solution, a biosensor coupled to the frame and configured to detect a bio-substance, and a pump unit configured to generate a flow-driving force to the buffer solution or the sample solution flowing in the channel; and a diagnostic device comprising a diagnostic device housing having a cartridge insertion port into which the biosensor cartridge is inserted, and a pump actuator disposed in the diagnostic device housing, coupled to the pump unit, and configured to rotate the pump unit.

In this configuration, when the biosensor cartridge may be inserted into the diagnostic device, the pump actuator is moved down and coupled with the pump unit.

Further, the biosensor cartridge may further include a valve unit configured to allow the buffer solution or the sample solution to flow to the biosensor by selectively opening or closing a buffer solution channel into which the buffer solution flows and a sample solution channel into which the sample solution flows.

Further, the diagnostic device may further include a valve actuator coupled to a valve knob of the valve unit and configured to rotate the valve knob.

In this configuration, when the biosensor cartridge may be inserted into the diagnostic device, the valve actuator may be moved down and coupled with the valve unit.

Meanwhile, the pump actuator may include: an actuator shaft coupled to the pump unit and configured to rotate the pump unit; an alignment guide portion having a larger diameter than the actuator shaft, having a guide slit, and integrally rotating with the actuator shaft; and an alignment sensing unit configured to sense a position of the guide slit when the alignment guide portion is rotated.

In this configuration, the pump actuator may arrange the alignment sensing unit and the guide slit one a vertical line by rotating the actuator shaft before the biosensor cartridge is inserted into the diagnostic device.

In this configuration, the channel may include: a buffer solution channel into which the buffer solution flows; a sample solution channel into which the sample solution flows; and a sensing channel configured to guide the buffer solution or the sample solution to the biosensor, and the valve unit may bring the buffer solution channel and the sensing channel into fluid communication with each other and then bring the sample solution channel and the sensing channel into fluid communication with each other.

Further, the channel may further include a prefill channel that is in fluid communication with the sample solution channel and through which the sample solution flows.

Meanwhile, the valve unit may bring the prefill channel and the sensing channel into fluid communication with each other and then bring the buffer solution channel and the sensing channel into fluid communication with each other.

Meanwhile, the pump actuator may be operated when rotation of the valve unit is stopped.

Meanwhile, the valve actuator may include an actuator shaft coupled with the valve unit and configured to rotate the valve unit, and the actuator shaft may be rotated one full rotation after the valve actuator is moved down.

Meanwhile, in order to achieve the objectives described above, a method of controlling a biosensor system according to the present disclosure includes: a shaft alignment step of aligning an actuator shaft of a valve actuator, which rotates a valve unit provided in the biosensor cartridge, and an actuator shaft of a pump actuator, which rotates a pump unit, to initial positions; a loading step of moving down the valve actuator and the pump actuator when the biosensor cartridge is inserted; and a diagnosing step of sensing the bio-substance by rotating the valve unit and the pump unit.

In the method, the shaft alignment step may sense a guide slit rotating with the actuator shafts through an alignment sensing unit while rotating the actuator shafts.

Further, the loading step may move down a loading plate coupled with the valve actuator and the pump actuator.

Further, the diagnosing step may include: a prefill step of rotating a connecting channel formed at the valve unit to a first position by operating the valve actuator; a buffer solution circulation step of rotating the connecting channel to a second position, which is different from the first position, by operating the valve actuator after the prefill step; and a sample solution circulation step of rotating the connecting channel to a third position, which is different from the first position and the second position, by operating the valve actuator after the buffer solution circulation step.

As described above, according to the biosensor system according to the present disclosure, there is an effect of automatically diagnosing a bio-substance through the simple process of inserting a biosensor cartridge, which is equipped with a valve unit and pump unit, into a diagnostic device.

Further, since the valve unit and the pump unit are disposed in the biosensor cartridge, there is an effect of being able to detect a bio-substance by operating the valve unit and the pump unit without spatial limitations when needed.

Further, since the valve unit and the pump unit are disposed the biosensor cartridge and the diagnostic device is equipped with only a simple actuator, the diagnostic device is configured in a compact size, so there is an effect of making it easy to transport the diagnostic device and eliminating spatial limitations at installation sites.

Further, when the pump unit is rotated, it presses the tube, so there is an effect that it is possible to allow a buffer solution or a sample solution to stably flow.

Further, there is an advantage of enabling miniaturization and sensitive sensing simultaneously by using a graphene-based biosensor.

Further, since a hydrophilic adhesive layer using a hydrophilic tape is formed between a base frame and a top frame, there is an effect of being able to a constant flow rate of a solution regardless of the environment in which diagnosis is conducted.

Further, another objective of the present disclosure is to provide a biosensor cartridge that can stably maintain flow of a buffer solution or a sample solution while allowing miniaturization of a biosensor and can stably transmit electrical signals.

Further, there is an effect that when a failure occurs in the biosensor, it is possible to separate only the sensor cover and replace just the biosensor.

Further, since a buffer blister is provided, there is an effect that it is possible to inject a buffer solution through a simple method of bursting a sealed buffer blister, and to prevent contamination of the buffer solution.

Further, there is an effect that it is possible to allow a buffer solution and a sample solution to naturally and sequentially flow using rotation of the valve unit.

### BRIEF DESCRIPTION OF THE DRAWINGS

FIG. 1 is a view illustrating a biosensor cartridge and a diagnostic device according to an embodiment of the present disclosure;
FIG. 2 is a perspective view illustrating the biosensor cartridge according to an embodiment of the present disclosure;
FIG. 3 is an exploded perspective view of FIG. 2;
FIG. 4 is a plan view of FIG. 2;
FIG. 5 is a plan view illustrating the state in which an upper housing has been removed from FIG. 4;
FIG. 6 is an exploded perspective view of a frame according to an embodiment of the present disclosure;
FIG. 7 is a plan view illustrating a top frame according to an embodiment of the present disclosure;
FIG. 8 is a cross-sectional view of the frame according to an embodiment of the present disclosure;
FIG. 9 is a bottom view illustrating channels formed on the top frame according to an embodiment of the present disclosure;
FIG. 10 is a view illustrating combination of a biosensor and a printed circuit board with a frame in the biosensor cartridge according to an embodiment of the present disclosure;
FIG. 11 is a view illustrating a sensor coupling portion in the biosensor cartridge according to an embodiment of the present disclosure;
FIG. 12 is a view illustrating the state in which the sensor coupling portion has been coupled in the biosensor cartridge according to an embodiment of the present disclosure;
FIG. 13 is a cross-sectional view illustrating contact between the biosensor and the printed circuit board in the biosensor cartridge according to an embodiment of the present disclosure;
FIG. 14 and FIG. 15 are cross-sectional views illustrating arrangement of the biosensor and the printed circuit board and the arrangement of flow paths on the biosensor in the biosensor cartridge according to an embodiment of the present disclosure;
FIG. 16 and FIG. 17 are views illustrating a process of opening/closing a sensor cover in the biosensor cartridge according to an embodiment of the present disclosure;
FIG. 18 is an exploded perspective view illustrating a valve unit and a pump unit in the biosensor cartridge according to an embodiment of the present disclosure;
FIG. 19 is an exploded perspective view illustrating the valve unit in the biosensor cartridge according to an embodiment of the present disclosure;
FIG. 20 is a perspective view illustrating a channel plate of the valve unit in the biosensor cartridge according to an embodiment of the present disclosure;
FIG. 21 is a bottom view illustrating the pump unit in the biosensor cartridge according to an embodiment of the present disclosure;
FIG. 22 is a view illustrating a process in which a tube is compressed by rotation of the pump unit in the biosensor cartridge according to an embodiment of the present disclosure;
FIG. 23 is a view illustrating a process in which a buffer solution is introduced upon bursting of a buffer blister in the biosensor cartridge according to an embodiment of the present disclosure;
FIG. 24 is a view illustrating a process in which a sample solution is introduced in the biosensor cartridge according to an embodiment of the present disclosure;
FIG. 25 is a perspective view illustrating the state in which the biosensor cartridge according to an embodiment of the present disclosure has been inserted in a diagnostic device;
FIG. 26 is a perspective view illustrating the internal configuration of the diagnostic device according to an embodiment of the present disclosure;
FIG. 27 is a view illustrating an actuator in the diagnostic device according to an embodiment of the present disclosure;
FIG. 28 is a view illustrating a configuration for aligning the actuator in the diagnostic device according to an embodiment of the present disclosure;
FIG. 29 is a view illustrating a process in which the actuator is moved down and coupled to the biosensor cartridge in the diagnostic device according to an embodiment of the present disclosure;
FIG. 30 is a view illustrating a process in which the actuator aligns the valve unit while rotating in the diagnostic device according to an embodiment of the present disclosure;
FIG. 31A is a view illustrating rotation of the value unit in a prefill step in the biosensor cartridge and the diagnostic device according to an embodiment of the present disclosure;
FIG. 31B is a view illustrating the flow of a sample solution in the prefill step in the biosensor cartridge and the diagnostic device according to an embodiment of the present disclosure;
FIG. 32A is a view illustrating rotation of the value unit in a buffer solution circulation step in the biosensor cartridge and the diagnostic device according to an embodiment of the present disclosure;
FIG. 32B is a view illustrating the flow of a buffer solution in the buffer solution circulation step in the biosensor cartridge and the diagnostic device according to an embodiment of the present disclosure;
FIG. 33A is a view illustrating rotation of the value unit in a sample solution circulation step in the biosensor cartridge and the diagnostic device according to an embodiment of the present disclosure;
FIG. 33B is a view illustrating the flow of a sample solution in the sample solution circulation step in the biosensor cartridge and the diagnostic device according to an embodiment of the present disclosure;
FIG. 34 is a block diagram illustrating the control relationship in the biosensor cartridge and the diagnostic device according to an embodiment of the present disclosure; and
FIG. 35 is a flowchart illustrating a method of controlling the diagnostic device according to an embodiment of the present disclosure.

### DETAILED DESCRIPTION

Hereinafter, exemplary embodiments of the present disclosure are described in detail with reference to the accompanying drawings.

The present disclosure may be modified in various ways and implemented by various exemplary embodiments, so that specific exemplary embodiments are shown in the drawings and will be described in detail herein. This is not intended to limit the present disclosure to specific embodiments, and it should be understood to include all modifications, equivalents, and substitutions within the spirit and scope of the present disclosure.

In the description of the present disclosure, it will be understood that although the terms first and/or second, etc. may be used herein to describe various components, these elements should not be limited by these terms. The terms are used only to distinguish one component from another component. For example, the "first" component may be named the "second" component, and vice versa, without departing from the scope of the present disclosure.

The term "and/or" may include a combination of a plurality of related and described items or any one of a plurality of related and described terms.

It is to be understood that when one element is referred to as being "connected to" or "coupled to" another element, it may be connected directly to or coupled directly to another element or be connected to or coupled to another element with the other element therebetween. On the other hand, it should be understood that when one element is referred to as being "connected directly to" or "coupled directly to" another element, it may be connected to or coupled to another element without the other element therebetween.

Terms used in the present disclosure are used only in order to describe specific exemplary embodiments rather than limiting the present disclosure. Singular forms are intended to include plural forms unless the context clearly indicates otherwise.

It will be further understood that the terms "comprises" or "have" used in this specification specify the presence of stated features, steps, operations, components, parts, or a combination thereof, but do not preclude the presence or addition of one or more other features, numerals, steps, operations, components, parts, or a combination thereof.

Unless defined otherwise, it is to be understood that all the terms used in the specification including technical and scientific terms have the same meanings as those that are generally understood by those who skilled in the art. It will be further understood that terms defined in dictionaries that are commonly used may be interpreted as having meanings that are consistent with their meanings in the context of the relevant art and may not be interpreted in an idealized or overly formal sense unless expressly so defined herein.

Further, the following embodiments are provided to give a more complete explanation to those skilled in the art, and the shapes and sizes of the elements in the drawings may be exaggerated for clearer explanation.

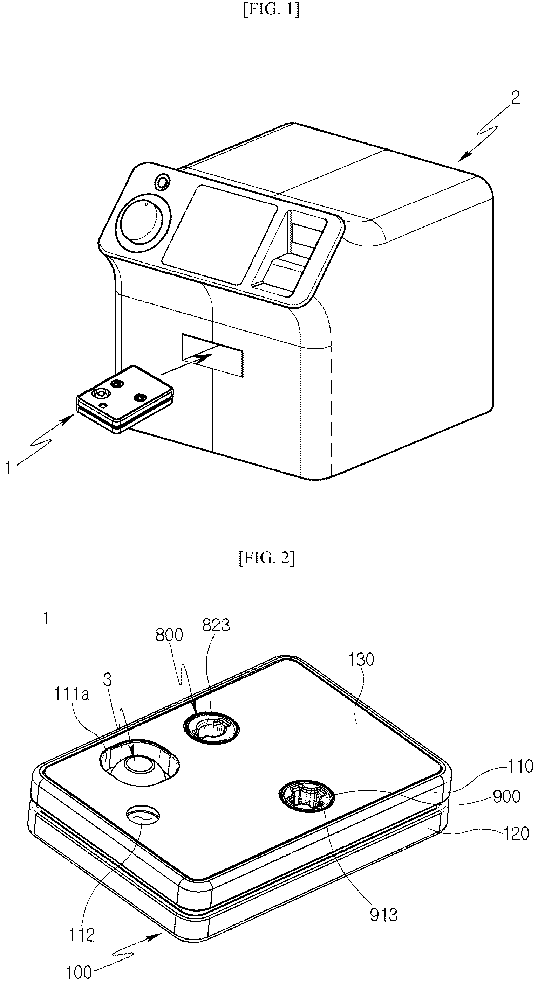

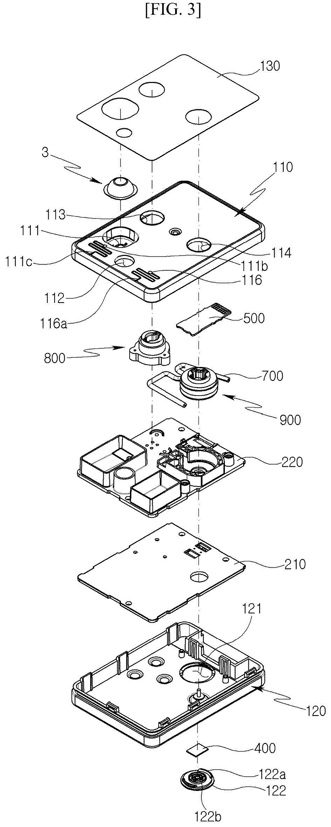

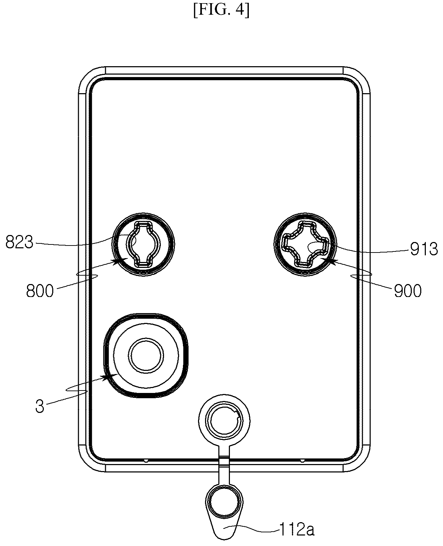

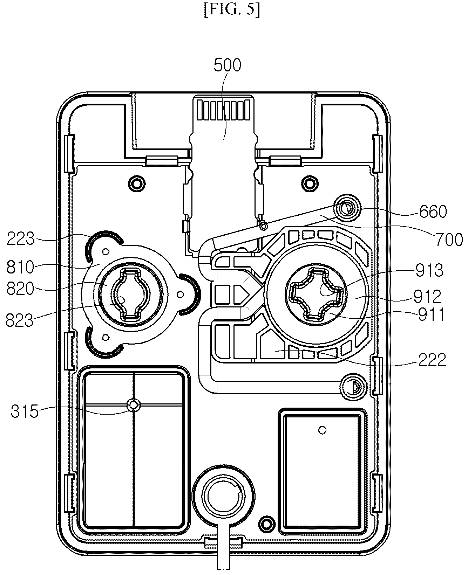

FIG. 1 is a view illustrating a biosensor cartridge and a diagnostic device according to an embodiment of the present disclosure, FIG. 2 to FIG. 4 are views illustrating the biosensor cartridge according to an embodiment of the present disclosure, and FIG. 5 is a plan view illustrating the state in which an upper housing has been removed from FIG. 4.

For reference, in the present disclosure, target materials refer to bio-substances representing specific substrates and can be interpreted as having the same meaning as analytes. In the present disclosure, probe materials are bio-substances that specifically bind to target materials, and can be interpreted as having the same meaning as receptors or acceptors. In the embodiment, bio-substances may be antigens, antibodies, DNA, small molecules, proteins, peptides, amino acids, ligand proteins, etc.

A biosensor cartridge 1 according to an embodiment of the present disclosure is described as follows with reference to FIG. 1 to FIG. 5.

A biosensor system according to an embodiment of the present disclosure includes the biosensor cartridge 1 and a diagnostic device 2. The biosensor cartridge 1 according to an embodiment of the present disclosure is coupled with the diagnostic device 2 and can sense bio-substances, thereby being able to diagnose diseases, etc.

In this configuration, the biosensor cartridge 1 according to an embodiment of the present disclosure can be inserted into the diagnostic device 2 while being arranged in the horizontal direction. Further, the biosensor cartridge 1 can enable a biosensor 400 to generate electrochemical reactions with bio-substances by making a buffer solution and a sample solution flow inside, and can transmit corresponding electrical variation to the diagnostic device 2 through a printed circuit board 500.

In detail, the biosensor cartridge 1 includes a housing 100, a frame 200, a tank 300, a biosensor 400, a printed circuit board 500, a channel 600, a tube 700, a valve unit 800, and a pump unit 900.

In this configuration, the frame 200 may be accommodated in the housing 100, the tank 300 may be formed on the frame 200, and the channel 600 may be formed inside the frame 200. Further, the tube 700, the valve unit 800, and the pump unit 900 may be coupled to the frame 200, and the biosensor 400 and the printed circuit board 500 may be detachably coupled to the frame 200.

For reference, in the present disclosure, the direction in which a buffer solution is introduced may be referred to as the upper side with respect to the frame 200 and the direction opposite to the upper side with respect to the frame 200 may be referred to as a lower side. Further, the direction in which the biosensor cartridge 1 is inserted into the diagnostic device 2 may be referred to as the front. That is, the direction in which the printed circuit board 500 is arranged with respect to the housing 100 may be referred to as the front. Further, the direction opposite to the front may be referred to as the rear. Further, when viewing the rear end of the housing 100 toward the front, the direction to the left may be referred to as the left side, and the direction to the right may be referred to as the right side.

The housing 100 can form the external appearance of the biosensor cartridge 1 and can accommodate the frame 200, the tank 300, the biosensor 400, the printed circuit board 500, the channel 600, the tube 700, the valve unit 800, and the pump unit 900 therein.

The housing 100 includes an upper housing 110 and a lower housing 120.

For example, the upper housing 110 is formed in a rectangular box shape with an open bottom, and a buffer solution introduction hole 111, a sample solution introduction hole 112, a valve connection hole 113, and a pump connection hole 114 may be formed on the top of the upper housing 110.

The buffer solution introduction hole 111 may be formed to introduce a buffer solution. The buffer solution introduction hole 111 may be formed in a blister accommodation groove 111a. In this configuration, the blister accommodation groove 111a may be disposed directly over a buffer solution tank 310. Accordingly, the buffer solution introduction hole 111 may also be disposed directly over the buffer solution tank 310 and may be formed in fluid communication with the internal space of the buffer solution tank 310.

A buffer blister 3 may be coupled to the blister accommodation groove 111a. The blister accommodation groove 111a may be recessed downward on the top surface of the upper housing 110 to correspond to the shape of the buffer blister 3. For example, the blister accommodation groove 111a may be recessed in the form of a rectangular groove or circular groove on the top surface of the upper housing 110. Further, at least one or more blister punches 111d that puncture a buffer blister 3 may protrude in the blister accommodation groove 111a. In this configuration, the blister punches 111d may be arranged circumferentially about the buffer solution introduction hole 111.

According to this configuration, when the buffer blister 3 is accommodated in the blister accommodation groove 111a and pressed therein, the blister punch 111d bursts the buffer blister 3, whereby a buffer solution can be introduced into the buffer solution tank 310 through the buffer solution introduction hole 111.

Meanwhile, according to an embodiment, at least one or more ventilation holes 111b and 116 may be formed on the top surface of the upper housing 110. The ventilation holes 111b and 116 may be formed so that the air in the housing 100 can be discharged to the outside.

In detail, a first ventilation hole 111b may be formed on the top surface of the upper housing 110. In this configuration, the first ventilation hole 111b may be disposed directly over the buffer solution tank 310. Accordingly, the first ventilation hole 111b may be formed in fluid communication with the internal space of the buffer solution tank 310. According to this configuration, when a buffer solution is introduced into the buffer solution tank 310, the air in the buffer solution tank 310 can be discharged to the outside through the first ventilation hole 111b. Accordingly, there is an advantage that it is possible to prevent the air pressure in the buffer solution tank 310 from increasing and reduce the possibility of a buffer solution mixing with air.

Further, according to an embodiment, a first ventilation flow path 111c may be further formed on the top surface of the upper housing 110. The first ventilation flow path 111c may be formed in fluid communication with the first ventilation hole 111d and may be formed in the form of a groove along the top surface of the upper housing 110. In this configuration, the ventilation flow path 111c may be formed not only in the form of a straight, but also in a shape bent a plurality of times on the top surface of the upper housing 110. This is for ensuring a maximum flow path length in a limited area. According to this configuration, when a label 130 is bonded to the top surface of the upper housing 110, the first ventilation flow path 111c forms a space between the upper housing 110 and the label 130, whereby it is possible to accommodate the air discharged through the first ventilation hole 111b.

The sample solution introduction hole 112 may be formed to introduce a sample solution. The sample solution introduction hole 112 may be disposed directly over a sample solution tank 320. Accordingly, the sample solution introduction hole 112 may be formed in fluid communication with the internal space of the sample solution tank 320. Meanwhile, a cap 112a may be detachably coupled to the sample solution introduction hole 112. Accordingly, when the cap 112 is coupled, the sample solution introduction hole 112 can be obstructed. Further, when the cap 112a is separated, the sample solution introduction hole 112 is opened, so a sample solution can be introduced. Meanwhile, when the sample solution introduction hole 112 is obstructed with the cap 112a after a sample solution is introduced, it is possible to prevent foreign substances from entering the sample solution introduction hole 112.

The valve connection hole 113 may be formed to pass a portion of the valve unit 800. The valve connection hole 113 may be formed over a valve coupling portion 223. In this configuration, the valve connection hole 113 may be formed in the form of a circular hole and a valve knob 820 may be arranged to extend through the valve connection hole 113. Further, the valve knob 820 can be rotated in the valve connection hole 113.

The pump connection hole 114 may be formed to pass a portion of the pump unit 900. The pump connection hole 114 may be formed over a valve coupling portion 223. In detail, the pump connection hole 114 may be formed over a pump accommodation groove 222a. In this configuration, the pump connection hole 114 may be formed in the form of a circular hole and a pump knob 910 may be arranged to extend through the pump connection hole 114. Further, the pump knob 910 can be rotated in the pump connection hole 114.

Meanwhile, a supporting protrusion 115 for supporting the printed circuit board 500 toward the inside of the housing 100 may be formed on the top surface of the upper housing 110. The supporting protrusion 115 may be disposed directly over a substrate coupling portion 221 of the frame 200. The supporting protrusion 115 can support the printed circuit board 500 in contact with the top surface of the printed circuit board 500.

Meanwhile, according to an embodiment, a second ventilation hole 116 may be further formed on the top surface of the upper housing 110. In this configuration, the second ventilation hole 116 may be disposed directly over a waste solution tank 330. Accordingly, the second ventilation hole 116 may be formed in fluid communication with the internal space of the waste solution tank 330. According to this configuration, when a buffer solution or a sample solution is introduced into the waste solution tank 330, the air in the waste solution tank 330 can be discharged to the outside through the second ventilation hole 116. Accordingly, it is possible to prevent the air pressure in the waste solution tank 330 from increasing.

Further, according to an embodiment, a second ventilation flow path 116a may be further formed on the top surface of the upper housing 110. The second ventilation flow path 116a may be formed in fluid communication with the second ventilation hole 116 and may be formed in the form of a groove along the top surface of the upper housing 110. In this configuration, the second ventilation flow path 116a may be formed not only in the form of a straight line, but also in a shape bent a plurality of times on the top surface of the upper housing 110. This is for ensuring a maximum flow path length in a limited area. According to this configuration, when a label 130 is bonded to the top surface of the upper housing 110, the second ventilation flow path 116a forms a space between the upper housing 110 and the label 130, whereby it is possible to accommodate the air discharged through the second ventilation hole 116.

The lower housing 120 is combined with the upper housing 110, thereby being able to form a space for accommodating the frame 200, the tank 300, the biosensor 400, the printed circuit board 500, the channel 600, the tube 700, the valve unit 800, and the pump unit 900 therein.

For example, the lower housing 120 may be formed in the form of a rectangular box with an open top and may be combined with the upper housing 120. In this configuration, a plurality of hooks protruding toward the upper housing 110 may be formed on the side walls of the lower housing 120 and may be fitted in grooves (not shown) formed on the side walls of the upper housing 110.

In this configuration, attachment between the upper housing 110 and the lower housing 120 can be further reinforced by performing bonding or adhesion on edge attachment areas of the upper housing 110 and the lower housing 120. Such bonding may be achieved by ultrasonic bonding, but is not limited thereto and may be achieved by a separate adhesive member. Accordingly, it is possible to prevent external moisture or foreign substances from entering the inside.

Meanwhile, a sensor introduction hole 121 through which the biosensor 400 can be introduced may be formed on the bottom surface of the lower housing 120. In this configuration, the diameter of the sensor introduction hole 121 may be smaller than the diameter of the sensor coupling portion 211 to be described below. For example, the sensor introduction hole 121 may be formed in the forms of a circular hole and a pair of cover coupling portions 121a may protrude radially inwardly from at least a portion of a side wall surrounding the sensor introduction hole 121. The cover coupling portions 121a may be supported by being coupled with hooks 122a of a sensor cover 122a.

Further, the sensor cover 122 may be coupled to the bottom surface of the lower housing 120. The sensor cover 122 can cover the sensor introduction hole 121 and can prevent separation of the biosensor 400 coupled to the frame 200.

The sensor cover 122 includes hooks 122a, a sensor supporting portion 122b, and a coupling guide groove 122c. For example, the entire sensor cover 122 may be formed in a disc shape, the hooks 122a and the sensor supporting portion 122b may protrude from the top surface of the cover 122, and the coupling guide groove 122c may be recessed on the bottom surface of the sensor cover 122. In this configuration, the diameter of the sensor cover 122 may be set to correspond to the diameter of the sensor introduction hole 121. For example, the diameter of the sensor cover 122 may be set to be the same as the diameter of the sensor introduction hole 121.

The hooks 122a may protrude upward from the top surface of the sensor cover 122 and the upper ends thereof may protrude radially outwardly. For example, the hooks 122a may be formed as a pair at positions facing each other and may be formed within a predetermined angular angle in the circumferential direction. According to this configuration, when the hooks 122a are inserted into the sensor introduction hole 121 where the cover coupling portions 121a are not formed and then the sensor cover 122 is rotated, the hooks 122a can be disposed over the cover coupling portions 121a. Accordingly, the cover coupling portions 121a are disposed between the hooks 122a and the top surface of the sensor cover 122, whereby it is possible to prevent separation of the sensor cover 122.

The sensor supporting portion 122b may protrude upward in the circumferential direction on the top surface of the sensor cover 122. For example, the sensor supporting portion 122b may protrude in the form of a circular rib around the center of the sensor cover 122 in the radial direction. The sensor supporting portion 122b may protrude to be able to support the bottom surface of the biosensor 400 in contact with the bottom surface. Accordingly, when the sensor cover 122 is coupled to the lower housing 120 and obstructs the sensor introduction hole 121, the sensor supporting portion 122b can support the biosensor 400 in contact with it. Accordingly, the biosensor 400 is prevented from shaking, whereby it is possible to prevent errors in measurement values of the biosensor 400.

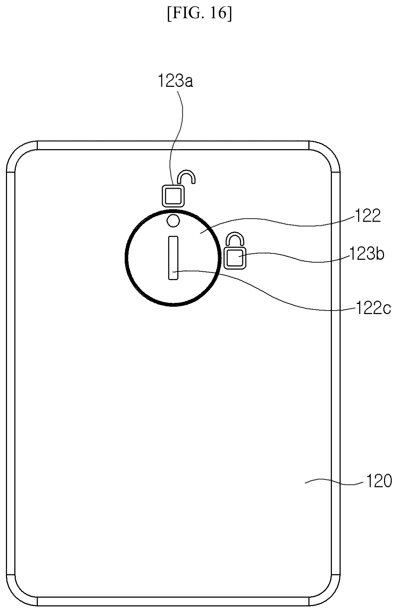

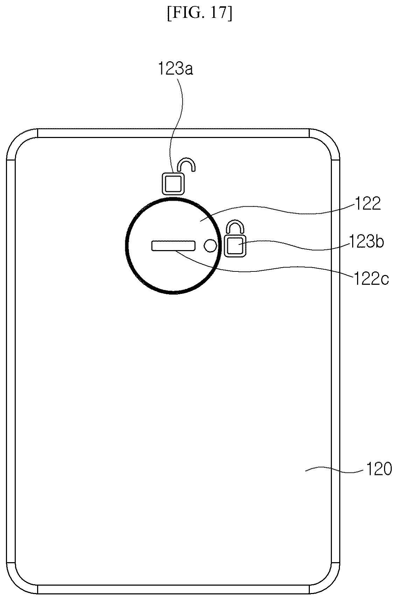

Meanwhile, referring to FIG. 16 and FIG. 17, a process in which the sensor cover 122 is fixed through coupling to the sensor introduction hole 121 is shown. In this case, a cover coupling guide portion 123 may be disposed on the lower housing 120 and a coupling guide groove 122c may be formed on the bottom surface of the sensor cover 122. The cover coupling guide portion 123 is formed so that a user can intuitionally recognize whether the coupling state of the sensor cover 122 is fixed or the sensor cover 122 is in a separable state. For example, the cover coupling guide portion 123 may be formed radially outside the sensor introduction hole 121, and an unlock mark 123a and a lock mark 123b may be arranged at predetermined intervals in the circumferential direction. In this configuration, the cover coupling portion 121a may be disposed radially inside the lock mark 123b. Further, the coupling guide groove 122c may be formed in the form of a rectangular groove on the bottom surface of the sensor cover 122. In this configuration, the hooks 122a may be disposed in the long axis direction (longitudinal direction) of the coupling guide groove 122c. Accordingly, a user can separate the sensor cover 122 and the lower housing 120 by turning an extension line in the longitudinal direction of the coupling guide groove 122c to the unlock mark 123a. Further, it is possible to locking the coupling state of the sensor cover 122 by turning the extension line in the longitudinal direction of the coupling guide groove 122c to the lock mark 123b with the sensor introduction hole 121 obstructed with the sensor cover 122.

According to this configuration, a user can easily couple the sensor cover 122 and can intuitionally recognize and perform the method of locking or unlocking the coupling state.

Therefore, according to the present disclosure, there is an effect that even though a user has low proficiency, the user can easily attach/detach the biosensor 400 to/from the biosensor cartridge 1.

Meanwhile, a label 130 may be bonded to the housing 100. The label 130 may be bonded to the top surface of the upper housing 110. The label 130 may display the information about the biosensor cartridge 1. For example, the label 130 may display information such as the name of a manufacturer, an introduction position of a buffer solution, an introduction position of a sample solution, and the direction for inserting into the diagnostic device 2.

According to this configuration, there is an advantage that even though a user has low proficiency, the user can easily use the biosensor cartridge 1.

Further, the label 130 may display a QR code that stores sensor information including a product ID for genuine product certification and a manufacturing serial number. A QR code may include all sensor information for genuine product certification, and for example, may include not only a product ID and a manufacturing serial number, but also biosensor information and cartridge information. Further, the biosensor information may include the activated sensing material of the biosensor 400, the disease to be diagnosed, the manufacturing date of the biosensor, the manufacturing location, and the manufacturing serial number. Further, the cartridge information may include the assembly date of the biosensor cartridge 1, the inspection date, the expiration date, and the sensor ID. IA QR code storing information in this way is read by a QR reading module of the diagnostic device 2, whereby a process for genuine product certification can be carried out through a cloud server. Through this certification process, it is possible to perform verification of errors including risks related to the currently used type of biosensor cartridge 1.

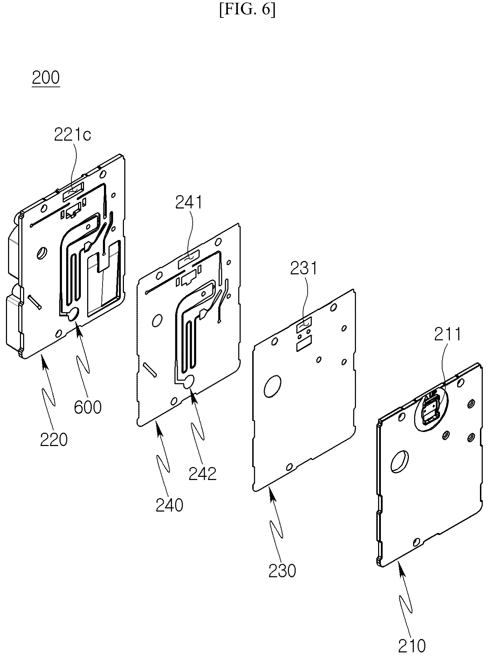

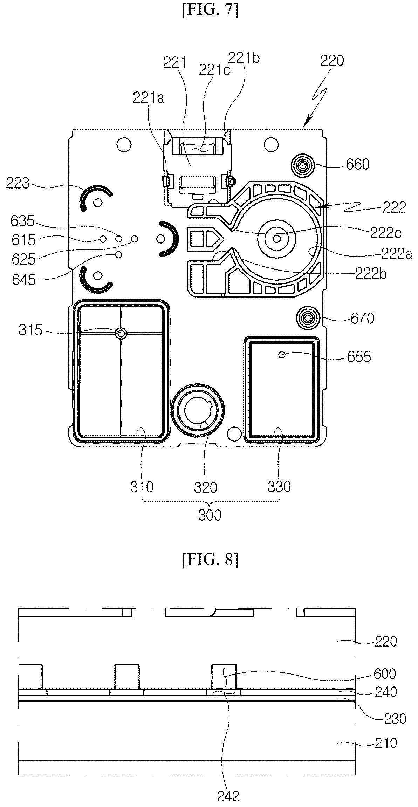

Meanwhile, FIG. 6 shows an exploded perspective view illustrating a frame according to an embodiment of the present disclosure, FIG. 7 shows a plan view illustrating a top frame according to an embodiment of the present disclosure, and FIG. 8 shows a cross-sectional view of the frame according to an embodiment of the present disclosure.

The frame 200 of the biosensor cartridge 1 according to an embodiment of the present disclosure and the tank 300 formed on the frame are described as follows with reference to FIG. 6 to FIG. 8.

The frame 200 may be disposed in the housing 100 and the channel 600 through which a buffer solution and a sample solution flows may be formed therein. Further, the biosensor 400 and the printed circuit board 500 are detachably coupled to the frame 200 so that the biosensor 400 can detect a bio-substance from a sample solution flowing through the channel 600.

The frame 200 includes a base frame 210, a top frame 220, a hydrophilic adhesive layer 230, and a fine flow path-forming adhesive layer 240. In this configuration, the hydrophilic adhesive layer 230 may be stacked on the base frame 210, the fine flow path-forming adhesive layer 240 may be stacked on the hydrophilic adhesive layer 230, and the top frame 220 may be stacked on the fine flow path-forming adhesive layer 240.

The biosensor 400 can be detachably coupled to the base frame 210. The base frame 210 can support the biosensor 400 though coupling to the biosensor 400. For example, the biosensor 210 may be formed in the form of a substantially rectangular flat plate and may have the sensor coupling portion 211 coupled with the biosensor 400.

The sensor coupling portion 211 may be disposed at a position facing the sensor introduction hole 121. In detail, the sensor coupling portion 211 may be disposed directly over the sensor introduction hole 121. In this configuration, the sensor coupling portion 211 may have a diameter smaller than the diameter of the sensor introduction hole 121. Accordingly, the biosensor 400 can be separated or coupled through the sensor introduction hole 121.

The sensor coupling portion 211 can be detachably coupled with the biosensor 400. The entire sensor coupling portion 211 may be formed in the form of a hole corresponding to the shape of the biosensor 400 and a frame crossing the hole in the short axis direction may be formed. A pair of ports 631 and 632 may be formed on the frame. For example, the sensor coupling portion 211 may be formed in the form of a rectangular hole, of which the front-rear diameter and the left-right diameter may be the same as the front-rear length and the left-right width of the biosensor 400, respectively.

Accordingly, the biosensor 400 can be fitted in the sensor coupling portion 211. Further, at least a portion of the side wall surrounding the sensor coupling portion 211 may be thicker than the biosensor 400. Accordingly, when the biosensor 400 is fitted in the sensor coupling portion 211, the biosensor 400 can be stably supported.

Meanwhile, holes for fixing the valve unit 800 and the pump unit 900 may be formed at the base frame 210. Fixing members such as screws may pass through the holes and be coupled with the valve unit 800 and the pump unit 900 disposed over the top frame 210.

The tank 300 may be formed on the top frame 220. In detail, the tank 300 may be formed on the top surface of the top frame 220. The tank 300 will be described below.

The channel 600 may be formed on the top frame 220. In detail, the channel 600 may be formed on the bottom surface of the top frame 220. The channel 600 will be described below.

In this configuration, the top frame 220 may be made of a resin material. For example, the top frame 220 may be made of a Poly Methyl Methacrylate (PMMA) resin. This allows for mass production while precisely forming the channel 600 through injection molding. In addition, there is an advantage that it is possible to easily bond the top frame 220 and the base frame 210 using a tape.

The substrate coupling portion 221 may be formed on the top surface of the top frame 220. The printed circuit board 500 can be detachably coupled to the substrate coupling portion 221. The sensor coupling portion 211 may be disposed on a first surface of the frame 200 and the substrate coupling portion 221 may be disposed on a second surface of the frame 200. In this configuration, the substrate coupling portion 221 may be disposed at a position facing the sensor coupling portion 211 with the frame 200 therebetween. In detail, at least a portion of the substrate coupling portion 221 may be disposed over the sensor coupling portion 211. This configuration enables minimizing the distance between the biosensor 400 and the printed circuit board 500. Accordingly, information sensed by the biosensor 400 can be quickly and accurately transmitted to the printed circuit board 500.

The substrate coupling portion 221 may include coupling guide portions 221a that guide slide coupling of the printed circuit board 500. The coupling guide portions 221a may be provided as a pair facing each other, protruding upward from the top surface of the top frame 220, and then bending and extending toward each other. In this configuration, the gap between the pair of coupling guide portions 221a may be the same as the width of the printed circuit board 500. Accordingly, the pair of coupling guide portions 221a can prevent the printed circuit board 500 from shaking in the horizontal direction by stably supporting the printed circuit board 500. Further, the protrusion height of the pair of coupling guide portions 221a may be the same as or slightly larger than the thickness of the printed circuit board 500. Accordingly, it is possible to the printed circuit board 500 from moving in the vertical direction.

Further, the substrate coupling portion 221 may further include substrate supporting portions 221b that guide the coupling position of the printed circuit board 500 and support the printed circuit board 500. The substrate supporting portions 221b may be provided as a pair facing each other and protruding upward on the top surface of the top frame 220. In this configuration, the substrate supporting portions 221b may be formed to correspond to the shapes of both ends of the printed circuit board 500in the width direction (short axis direction). For example, when a semicircular groove is formed at both ends of the printed circuit board 500 in the width direction, the pair of substrate supporting portions 221b may be formed in semicircular shapes protruding toward. Further, the shortest distance between the pair of substrate supporting portions 221b may be the same as the shortest distance of the printed circuit board 500 in the width direction. Accordingly, when the printed circuit board 500 is coupled, the coupling position can be guided while it is fitted to the substrate supporting portions 221b, and it is possible to prevent the printed circuit board 500 from moving in the insertion direction.

As a result, the substrate coupling portion 221 can prevent the printed circuit board 500, which has been coupled, from shaking in the horizontally direction and the vertical direction through the coupling guide portions 221a and the substrate supporting portions 221b.

Accordingly, the substrate coupling portion 221 stably support the printed circuit board 500 that has been coupled, whereby there is an effect that it is possible to prevent errors in data due to shaking of the printed circuit board 500.

Further, clip accommodation holes 221c that accommodate contact clips 450 may be formed at the substrate coupling portion 221. The clip accommodation holes 221c may be disposed as a pair on the substrate coupling portion 221. In this configuration, at least a portion of one of the pair of clip accommodation holes 221c may be disposed between the pair of coupling guide portions 221a. Further, at least a portion of the other one of the pair of clip accommodation holes 221c may be disposed between the pair of substrate supporting portions 221b.

Accordingly, it is possible to prevent the contact clips 450 accommodated in the clip accommodation holes 221c from being disengaged from a predetermined position.

Further, the pair of clip accommodation holes 221c may be formed in fluid communication with the sensor coupling portion 211. In this configuration, at least a portion of each of the pair of clip accommodation holes 221c may be disposed at a position facing the sensor coupling portion 211. For example, the sensor coupling portion 211 may be disposed between the pair of clip accommodation holes 221c such that a portion of each of both ends of the sensor coupling portion 211 in the longitudinal direction (front-rear direction) overlaps at least a portion of each of the pair of clip accommodation holes 221c.

According to this configuration, a step to which the contact clips 450 can be formed with the base frame 210 and the top frame 220 stacked. Further, there is an advantage that the contact clips 450 themselves can be in direct contact with the biosensor 400 and the printed circuit board 500. As a result, the biosensor cartridge 1 according to the present disclosure can improve the accuracy of data transmission through the contact clips 450.

Meanwhile, a tube accommodation portion 222 may be formed on the top frame 220. The tube accommodation portion 222 may protrude upward from the top surface of the top frame 220. The tube accommodation portion 222 can guide the arrangement position of the tube 700 on the top frame 220.

In detail, the tube accommodation portion 222 may convexly protrude from the top surface of the top frame 220 and may have a pump accommodation groove 222a and tube guide grooves 222b therein.

The pump accommodation groove 222a can accommodate at least portions of the tube 700 and the pump unit 900 therein. In this configuration, the tube 700 may be circumferentially disposed and at least a portion of the pump unit 900 may be rotatably accommodated inside the wound tube 700. Further, at least a portion of the pump unit 900 may be disposed in the pump accommodation groove 222a in contact with the tube 700. For example, the pump accommodation groove 222a may be formed in the form of a circular groove and the tube 700 may be wound along the inner circumference thereof, and the pump unit 900 may be rotatably disposed inside the tube 700.

According to this configuration, when the pump unit 900 is rotated, the tube 700 disposed between the side wall of the pump accommodation groove 222a and the pump unit 900 can be compressed.

The tube guide grooves 222b are formed in fluid communication with the pump accommodation groove 222a and can accommodate at least a portion of the tube 700. In detail, a first side and a second side of the tube 700 wound in the pump accommodation groove 222a can be accommodated in the tube guide grooves 222b, respectively. In this configuration, the tube guide grooves 222b can accommodate the tube 700 such that the first side and the second side of the tube 700 cross each other. That is, the groove accommodating the first side of the tube 700 and the groove accommodating the second side of the tube 700 may merge into a single groove, and the merged point 222c may be formed in fluid communication with the pump accommodation groove 222a.

Accordingly, when the pump 900 is rotated, at least a portion of the tube 700 can remain in contact with the pump unit 900. Therefore, it is possible to prevent backflow of a solution flowing through the tube 700 when the pump 900 is rotated.

Meanwhile, a valve coupling portion 223 may be formed on the top frame 223. The valve coupling portion 223 may protrude upward from the top surface of the top frame 220. For example, the valve coupling portion 223 may protrude in the form of a rib from the top surface of the top frame 220. The valve coupling portion 223 may be formed to surround the outer side of at least a portion of the valve unit 800. Accordingly, the valve coupling portion 223 can guide the coupling position of the valve unit 800.

Meanwhile, a plurality of ports may be formed on the top frame 223. In this configuration, the ports can provide spaces through which a buffer solution or a sample solution flows into the channel 600 or into which a buffer solution or a sample solution is discharged from the channel 600. In detail, a buffer solution inlet port 315, a buffer solution port 615, a sample solution port 625, a sensing port 635, a prefill port 645, a waste solution port 655, a first tube connection port 660, and a second tube connection port 670 may be formed on the top frame 220.

In this configuration, the buffer solution inlet port 315 may be disposed in the buffer solution tank 310 to enable the buffer solution in the buffer solution tank 310 to flow into the channel 600.

Further, the buffer solution port 615, the sample solution port 625, the sensing port 635, and the prefill port 645 may be arranged to be connected by the valve unit 800. For example, the buffer solution port 615, the sample solution port 625, and the prefill port 645 may be arranged on a coaxial circle centered around the sensing port 635. In this configuration, the buffer solution port 615, the sample solution port 625, and the prefill port 645 may be arranged at predetermined angular intervals around the sensing port 635.

Further, the first tube connection port 660 and the second tube connection port 670 may be connected with the tube 700. In this configuration, the first tube connection port 660 and the second tube connection port 670 may be disposed adjacent to the pump unit 900. For example, the second tube connection port 670 may be disposed on one side of the pump unit 900 in the longitudinal direction of the top frame 220, and the first tube connection port 660 may be disposed on another side of the pump unit 900 in the longitudinal direction of the top frame 220.

Meanwhile, in the case of biosensor cartridges of the related art, a channel was formed inside a frame to allow liquid to flow, but, during testing of sample solutions, the flow rate of the solutions was not constant, which results in a limitation in the accuracy of sensing.

In order to solve this problem, hydrophilic coating was applied to a base frame in some cases, but there was the drawback that due to the addition of the coating process, production costs increased, while the defect rate also increased due to coating irregularities.

Accordingly, in the present disclosure, the flow rate of a solution can be maintained at a constant level through the hydrophilic adhesive layer 230 while minimizing production cost increases and defect rates.

The hydrophilic adhesive layer 230 may be disposed between the base frame 210 and the top frame 220. The hydrophilic adhesive layer 230 may be disposed between the base frame 210 and the fine flow path-forming adhesive layer 240. For example, the hydrophilic adhesive layer 230 may be a hydrophilic tape or a hydrophilic film. The hydrophilic adhesive layer 230 may be disposed on the base frame 210, thereby making it possible to facilitate the flow of the fluid flowing through the channel 600. Accordingly, the hydrophilic adhesive layer 230 provides the effect that the flow rate of a solution can be stably maintained.

Further, there is an advantage that bonding can be achieved through a simple process of placing the hydrophilic adhesive layer 230, fine flow path-forming adhesive layer 240, and the top frame 220 over the base frame 210 and then pressing them.

A shape corresponding to the shape of the top frame 220 may be formed at the hydrophilic adhesive layer 230. For example, clip accommodation holes 231 may be formed at the hydrophilic adhesive layer 230. The clip accommodation holes 231 of the hydrophilic adhesive layer 230 may be formed at positions facing the clip accommodation holes 221c of the top frame 220 and may be formed in the same size.

Further, a shape corresponding to the shape of the base frame 210 may be formed at the hydrophilic adhesive layer 230. For example, ports may be formed at the hydrophilic adhesive layer 230. The ports of the hydrophilic adhesive layer 230 may be formed at positions facing the ports 631a and 632a of the base frame 210 and may be formed in the same size.

The fine flow path-forming adhesive layer 240 may be disposed between the hydrophilic adhesive layer 230 and the top frame 220. The fine flow path-forming adhesive layer 240 can bond the hydrophilic adhesive layer 230 and the top frame 220. In this configuration, a shape corresponding to the shape of the top frame 220 may be formed at the fine flow path-forming adhesive layer 240.

In detail, a channel slit 242 that is in fluid communication with the channel 600 formed at the top frame 220 may be formed at the fine flow path-forming adhesive layer 240. The channel slit 242 may be formed at a position facing the channel 600. In this configuration, the width of the channel slit 242 may be larger than the width of the channel 600. This configuration enables preventing errors in the flow of solutions even through there is an error in the position of the channel slit 242.

Further, clip accommodation holes 241 may be formed at the fine flow path-forming adhesive layer 240. The clip accommodation holes 241 of the fine flow path-forming adhesive layer 240 may be formed at positions facing the clip accommodation holes 221c of the top frame 220 and may be formed in the same size.

The tank 300 is formed on the top surface of the frame 200 and can provide a space in which a buffer solution and/or a sample solution can be accommodated. For example, the tank 300 may protrude from the top surface of the top frame 220 to surround a predetermined space.

The tank 300 may include a buffer solution tank 310. The buffer solution tank 310 can receive a buffer solution, accommodate the buffer solution at least temporarily, and send the buffer unit to the channel 600.

The buffer solution tank 310 may be disposed at the rear (a side in the longitudinal direction) of the frame 200. The buffer solution tank 310 may be disposed opposite the substrate coupling portion 221 on the frame 200.

Further, the buffer solution tank 310 may be disposed at the left side (a side in the short axis direction) of the frame 200. The buffer solution tank 310 may be disposed opposite the waste solution tank 330 on the frame 200.

The buffer solution tank 310 may protrude in the form of a wall from the top surface of the top frame 220. For example, the buffer solution tank 310 may protrude in the form of a rectangular wall. In this configuration, the buffer solution inlet port 315 may be formed on the top frame 220 and may be formed in fluid communication with the buffer solution channel 610. The buffer solution inlet port 315 may be formed in the buffer solution tank 310. Further, an inclined surface 311 and a guide groove that guide a buffer solution to flow to the buffer solution inlet port 315 may be formed in the buffer solution tank 310. For example, the inclined surface may be formed to slope downward from the rear end of the buffer solution tank 310 toward the front. Further, the inclined surface may be formed to slope downward from both sides toward the center of the buffer solution tank 310 in the left-right direction. Accordingly, a guide groove may be formed in the front-rear direction on the internal bottom surface of the buffer solution tank 310. Further, the buffer solution inlet port 315 may be formed on the guide groove.

Accordingly, the buffer solution tank 310 can surround the space into which a buffer solution flows. Therefore, a buffer solution can be accommodated in the buffer solution tank 310 and the buffer solution can be discharged to the channel 600 by the operation of the pump unit 900.

The tank 300 may include a sample solution tank 320. The sample solution tank 320 can receive a sample solution, accommodate the sample solution at least temporarily, and send the sample unit to the channel 600.

The sample solution tank 320 may be disposed at the rear side on the frame 200. The sample solution tank 320 may be disposed opposite the substrate coupling portion 221 on the frame 200.

Further, at least a portion of the sample solution tank 320 may be disposed at the center of the frame 200 in the left-right direction. The sample solution tank 320 may be disposed between the buffer solution tank 310 and the waste solution tank 330.

The sample solution tank 320 may protrude in the form of a wall from the top surface of the top frame 220. For example, the sample solution tank 320 may protrude in the form of a circular wall. In this configuration, the top frame 220 may be formed with the bottom of the internal space of the sample solution tank 320 at least partially open. The internal space of the sample solution tank 320 may be formed in fluid communication with the sample solution channel 620.

Accordingly, the sample solution tank 320 can surround the space into which a sample solution flows. Therefore, a sample solution can be accommodated in the sample solution tank 320 and the sample solution can be discharged to the channel 600 by the operation of the pump unit 900.

The tank 300 may include a waste solution tank 330. The waste solution tank 330 can receive a waste solution and store the waste solution.

The waste solution tank 330 may be disposed at the rear side on the frame 200. The waste solution tank 330 may be disposed opposite the substrate coupling portion 221 on the frame 200.

Further, the waste solution tank 330 may be disposed at the right side on the frame 200.

The waste solution tank 330 may protrude in the form of a wall from the top surface of the top frame 220. For example, the waste solution tank 330 may protrude in the form of a rectangular wall. In this configuration, the waste solution port 655 may be formed on the top frame 220 and may be formed in fluid communication with the waste solution channel 650. The waste solution port 655 may be formed in the waste solution tank 330.

Accordingly, the waste solution tank 330 can surround the space into which a waste solution flows. Accordingly, a waste solution can be sent into and stored in the waste solution tank 330 from the channel 600 by the operation of the pump unit 900.

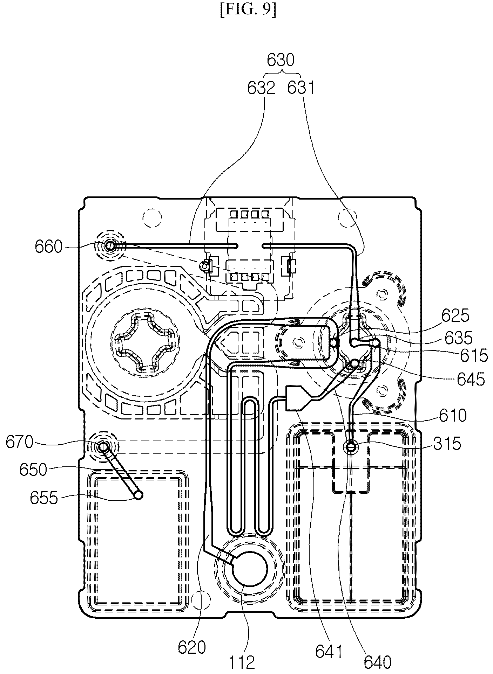

Meanwhile, FIG. 9 shows a bottom view illustrating channels formed on the top frame according to an embodiment of the present disclosure.

The channel 600 of the biosensor cartridge 1 according to an embodiment of the present disclosure is described as follows with reference to FIG. 9.

The channel 600 is formed inside the frame 200 and can provide flow paths through which a buffer solution or a sample solution can flow. In detail, the channel 600 may be formed on the bottom surface of the top frame 220.

The channel 600 includes a buffer solution channel 610 that is connected with the buffer solution tank 310 and through which a buffer solution flows. In detail, a first side of the buffer solution channel 610 may be in fluid communication with the buffer solution inlet port 315. Accordingly, the first side of the buffer solution channel 610 can be in fluid communication with the internal space of the buffer solution tank 310 through the buffer solution inlet port 315. Further, a second side of the buffer solution channel 610 may be in fluid communication with the buffer solution port 615. The second side of the buffer solution channel 610 can be brought into fluid communication with the sensing channel 630 through the buffer solution port 615, depending on the operation of the valve unit 800.

The buffer solution channel 610 can guide the buffer solution flowing in the buffer solution tank 310 to the valve unit 800. For example, the buffer solution channel 610 may be formed in the longitudinal direction (long axis direction) of the frame 200. In this configuration, depending on embodiments, the buffer solution channel 610 may be formed in a shape bent at least once at a predetermined angle. For example, the buffer solution channel 610 may be formed to overall have two bent portions in the longitudinal direction (long axis direction) of the frame 200.

Meanwhile, the buffer solution inlet port 315 can function as an inlet of the buffer solution channel 610 and the buffer solution port 615 can function as an outlet of the buffer solution port 615.

In this case, the buffer solution channel 610 may be formed such that the width of the inlet side and the width of the outlet side are different. For example, the buffer solution channel 610 may be formed such that the width of the outlet side is larger than the width of the inlet side. Accordingly, a buffer solution can be sufficiently present at the outlet side of the buffer solution channel 610 and it is possible to prevent the flow rate of a buffer solution passing through the valve unit 800 from decreasing. Accordingly, there is an effect that the flow fate of a buffer solution can be stably maintained.

The channel 600 includes a sample solution channel 620 that is connected with the sample solution tank 320 and through which a sample solution flows. In detail, a first side of the sample solution channel 620 may be in fluid communication with the internal space of the sample solution tank 320. Further, a second side of the sample solution channel 620 may be in fluid communication with the sample solution port 625. The second side of the sample solution channel 620 can be brought into fluid communication with the sensing channel 630 through the sample solution port 625, depending on the operation of the valve unit 800.

The sample solution channel 620 can guide the sample solution flowing in the sample solution tank 320 to the valve unit 800. For example, the sample solution channel 620 may be formed in a direction crossing the longitudinal direction (long axis direction) of the frame 200 from the sample solution tank 320, then bent and extended in the longitudinal direction of the frame 200, and then bent and formed in a direction crossing the longitudinal direction. Accordingly, the internal space of the sample solution tank 320 can function as an inlet of the sample solution channel 620 and the sample solution port 625 can function as an outlet of the sample solution channel 620.

Meanwhile, the internal space of the sample solution tank 320 can function as an inlet of the sample solution channel 620 and the sample solution port 625 can function as an outlet of the sample solution channel 620.

In this configuration, the diameter of the internal space of the sample solution tank 320 may be larger than the width of the outlet side of the sample solution channel 620. Further, the width of at least a portion of the sample solution channel 620 may be changed. For example, the width of the inlet side and the width of the outlet side of the sample solution channel 620 may be the same and a section in which the width decreases may be formed therebetween.

Accordingly, it is possible to prevent the flow rate of a sample solution flowing through the sample solution channel 620 from momentarily decreasing through the operation of the pump unit 900. Accordingly, there is an effect that the flow fate of a sample solution can be stably maintained.

The channel 600 may include a sensing channel 630 connected with the buffer solution channel 610 and the sample solution channel 620 and guiding a buffer solution or a sample solution to the biosensor 400. In detail, a first side of the sensing channel 630 may be in fluid communication with the sensing port 635. Further, a second side of the sensing channel 630 may be in fluid communication with the first tube connection port 660. The second side of the sensing channel 630 can be brought into fluid communication with the channel formed in the tube 700 through the first tube connection port 660, depending on the operation of the valve unit 800.

The sensing channel 630 can guide a buffer solution or a sample solution flowing therein through the valve unit 800 to the biosensor 400 to pass through the biosensor 400. In detail, the sensing channel 630 may include a first sensing channel 631 and a second sensing channel 632.

In this configuration, the first sensing channel 631 can guide a buffer solution or a sample solution that has passed through the valve unit 800 to the biosensor 400. For example, the first sensing channel 631 may be formed in the longitudinal direction (long axis direction) of the frame 200 from the sensing channel 630, and then bent and formed in a direction crossing the longitudinal direction. For example, the first sensing channel 631 may be formed in the longitudinal direction (long axis direction) of the frame 200 from the sensing channel 635, and then bent and formed in the width direction. A second side of the first sensing channel 631 may be in fluid communication with the internal space of the sensor coupling portion 211. In detail, the first sensing channel 631 enables a buffer solution or a sample solution to flow to the internal space of the sensor coupling portion 211 through the inlet port 631a formed at the base frame 210.

According to this configuration, a buffer solution or a sample solution that has passed through the first sensing channel 631 can flow on the top surface of the biosensor 400.

Meanwhile, the sensing port 635 can function as an inlet of the first sensing channel 631 and the sensor coupling portion 211 can function as an outlet of the first sensing channel 631.

In this configuration, the width of the inlet side of the first sensing channel 631 may be larger than the width of the outlet side of the first sensing channel 631. Accordingly, a buffer solution or a sample solution can be sufficiently present at the inlet side of the first sensing channel 631 and it is possible to prevent the flow rate of a buffer solution or a sample solution flowing through the first sensing channel 631 from momentarily decreasing through the operation of the pump unit 900. Accordingly, there is an effect that the flow fate of a buffer solution or a sample solution can be stably maintained.

Further, the second sensing channel 632 can guide a buffer solution or a sample solution that has passed through the biosensor 400 to the tube 700. For example, the second sensing channel 632 may be in fluid communication with the outlet port 632a formed at the base frame 210, and may be in fluid communication with the first tube connection port 660 by being formed in the left-right direction. In this configuration, the second sensing channel 632 may be disposed in a straight line with the downstream side of the first sensing channel 631. According to this configuration, it is possible to form the channel passing through the biosensor 400 in the form of a straight line and it is possible to stably maintain the flow velocity and/or flow rate of a buffer solution or a sample solution flowing through the biosensor 400. Therefore, the biosensor cartridge 1 of the present disclosure can increase the accuracy of sensing bio-substances.

The channel 600 may include a prefill channel 640 that is in fluid communication with the sample solution channel 620 and through which a sample solution flows. In detail, a first side of the prefill channel 640 may be in fluid communication with the sample solution channel 620. Further, the first side of the prefill channel 640 may be in fluid communication with the sample solution port 625. Further, a second side of the prefill channel 640 may be in fluid communication with the prefill port 645.

The prefill channel 640 can guide a sample solution, which has passed through the sample solution channel 620, to the prefill port 645. For example, the prefill channel 640 may be formed in fluid communication with the sample solution channel 620, and may be in fluid communication with the prefill port 645 by bending a plurality of times.

In this configuration, the width of at least a portion of the prefill channel 640 may be changed. For example, the width of the inlet side and the width of the outlet side of the prefill channel 640 may be the same and a section in which the width decreases may be formed therebetween.

Further, a valve 641 having a width larger than those of the inlet and the outlet may be provided in the prefill channel 640. The valve 641 may have the largest width in the prefill channel 640 and the width of the inlet side for inflow to the valve 641 may be the smallest in the prefill channel 640. Accordingly, when a large amount of sample solution momentarily flows into the prefill channel 640, it is possible to prevent the sample solution from being discharged to the prefill port 645.

The channel 600 may include a waste solution channel 650 that guides a buffer solution or a sample solution, which has passed through the tube 700, to the waste solution tank 330. In detail, a first side of the waste solution channel 650 may be in fluid communication with the second tube connection port 670. Further, a second side of the waste solution channel 650 may be in fluid communication with the waste solution port 655. Accordingly, when the pump unit 900 is operated, a buffer solution or a sample solution that has passed through the tube 700 can be stored in the waste solution tank 330.

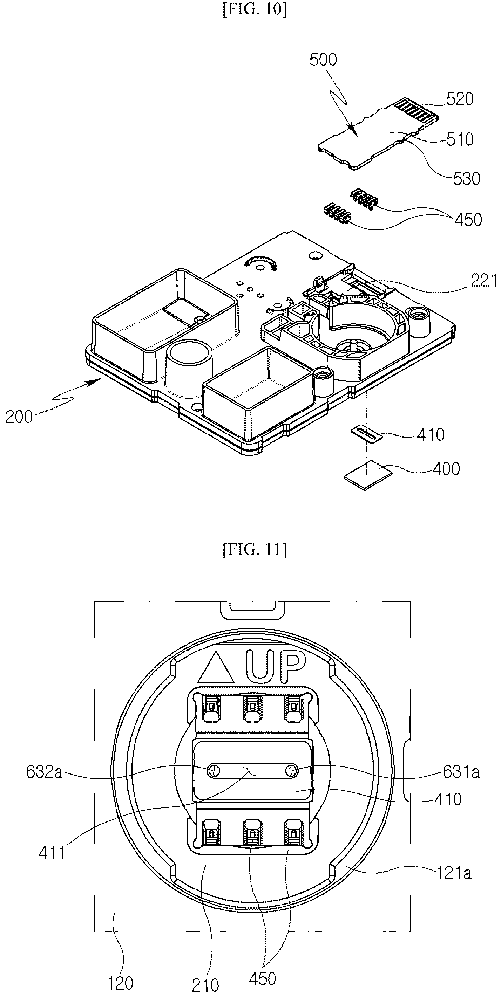

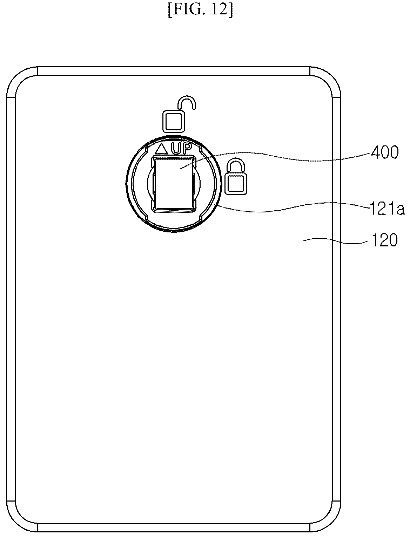

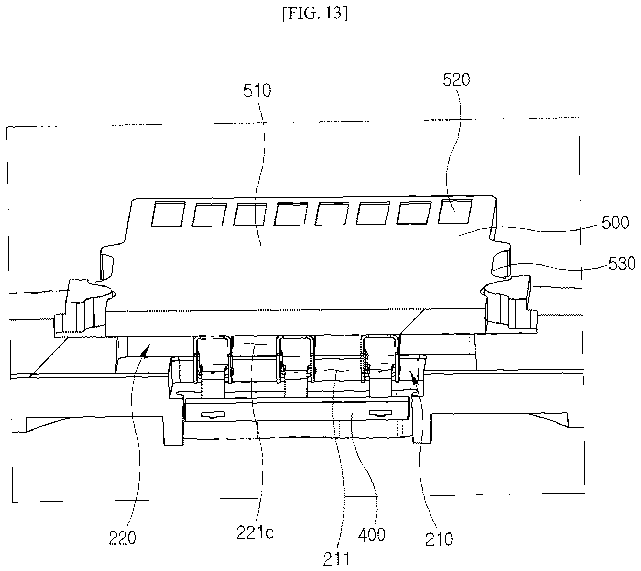

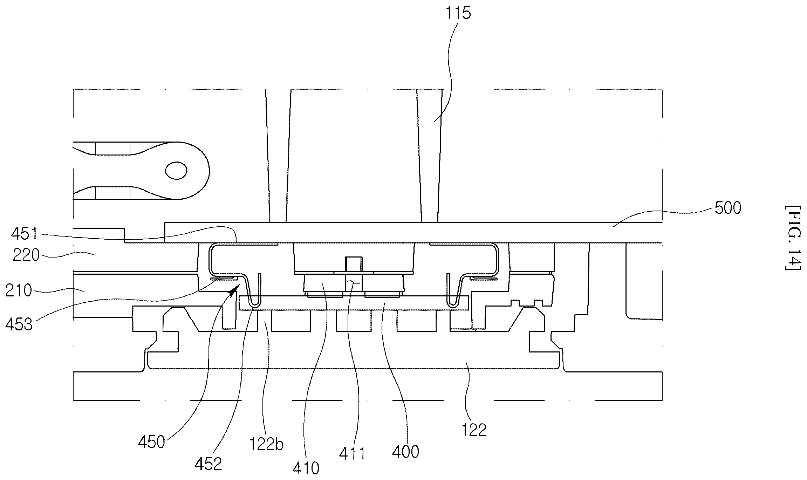

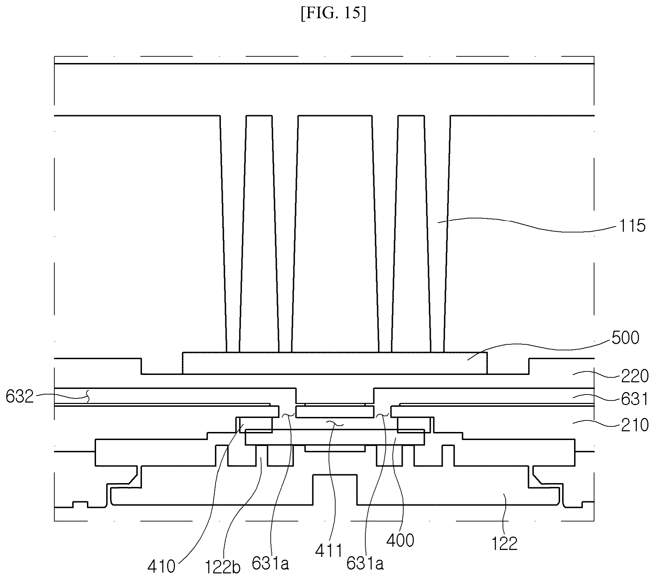

Meanwhile, FIG. 10 shows a view illustrating combination of a biosensor and a printed circuit board with a frame in the biosensor cartridge according to an embodiment of the present disclosure, FIG. 11 shows a view illustrating a sensor coupling portion in the biosensor cartridge according to an embodiment of the present disclosure, FIG. 12 shows a view illustrating the state in which the sensor coupling portion has been coupled in the biosensor cartridge according to an embodiment of the present disclosure, FIG. 13 shows a cross-sectional view illustrating contact between the biosensor and the printed circuit board in the biosensor cartridge according to an embodiment of the present disclosure, and FIG. 14 and FIG. 15 show cross-sectional views illustrating arrangement of the biosensor and the printed circuit board and the arrangement of flow paths on the biosensor in the biosensor cartridge according to an embodiment of the present disclosure.

The biosensor 400, the contact clips 450, and the printed circuit board 500 of the biosensor cartridge 1 according to an embodiment of the present disclosure are described as follows with reference to FIG. 10 to FIG. 15.

The biosensor 400 is detachably coupled to the frame 200 and can sense bio-substances. The biosensor 400 can be introduced through the sensor introduction hole 121 of the lower housing 120 and can be coupled to the sensor coupling portion 211 of the base frame 210.

The biosensor 400 can selectively detect trace amounts of biological substances to be analyzed by converting biological interactions and recognition reactions into electrical signals, with a bio receptor that has a recognition function for specific bio-substances combined with an electrical transducer.

The biosensor 400 of the present disclosure may be an electrochemical-based biosensor. An electrochemical-based biosensor is a combination of the analytical capabilities of electrochemical methods and the specificity of biological recognition, and by immobilizing or incorporating substances, which have biological specificity, such as enzymes, antigens, antibodies, biochemical substances, that is, sensing materials onto an electrode surface, it detects the biological recognition phenomenon for the target substance as a current or potential change.

For example, a sensing unit may be disposed on the top surface of the biosensor 400. A bio receptor may be disposed on the sensing unit. A buffer solution and a sample solution can flow in the sensing unit. A circuit is connected to the sensing unit, so electric signals generated by the sensing unit can be transmitted.

A circuit may be disposed on the biosensor 400 and may be electrically connected with the printed circuit board 500 through the contact clips 450.

The biosensor 400 according to an embodiment of the present disclosure has a graphene-based Field Effect Transistor (FET) using a graphene layer as a channel.

The biosensor 400 includes a substrate, a source electrode and a drain electrode spaced apart from each other on the substrate, and a graphene layer disposed on the substrate and having one end connected to the source electrode and another end connected to the drain electrode.

Meanwhile, the biosensor 400 may further include an insulating layer disposed on the substrate.

The source electrode, the drain electrode, and the graphene layer may be disposed on the insulating layer. Accordingly, the sensing sensitivity of the graphene-based sensor can be improved.

The substrate may be a silicon substrate as a semiconductor substrate. The insulating layer on the substrate may be made of silicon oxide (SiO₂) or silicon nitride. For example, a silicon oxide-based insulating layer may be formed on a surface through heat treatment. Meanwhile, the graphene layer is formed on the insulating layer.

The graphene layer is open in a partial region for sensing, while the other region is covered by a doping layer.

Meanwhile, the graphene layer may be provided as a plurality of layers in the biosensor 400. The graphene layer may be formed in a partial region of the insulating layer. Meanwhile, the source electrode and the drain electrode may be spaced apart from each other and may be formed on portions of the insulating layer and graphene layer.

A sample solution can come into contact with an open region of the graphene layer of the biosensor 400, and a portion of the gate electrode.

Meanwhile, a linker material may be attached for smooth connection between the sensing material and the graphene layer. The linker material may vary depending on the graphene layer and the sensing material.

When the graphene layer is a polymer structure having a nano size, the linker material may be made of at least one selected from polyurethane, polydimethylsiloxane, Norland Optical Adhesives (NOA), epoxy, polyethylene terephthalate, polymetyl methacrylate, polyimide, polystyrene, polyethylene naphthalate, polycarbonate, and combinations thereof.

Further, the linker material may be made of a combination of polyurethane and NOA (for example, NOA 68). However, the linker material is not limited thereto and may be made of various polymers with flexibility.

Meanwhile, when a sample solution is introduced and corresponding voltages are applied to the source electrode, the drain electrode, and the gate electrode, respectively, and in this state, when a target substance exists in the sample solution, the graphene layer is charged with a specific carrier as the target substance and the sensing material react. Accordingly, a depletion state in which charge is accumulated in the graphene layer progresses, and a drain current flowing through the drain electrode increases.

Meanwhile, when a sample solution is introduced and corresponding voltages are applied to the source electrode, the drain electrode, and the gate electrode, respectively, and in this state, when a target substance does not exist in the sample solution, a drain current flowing through the drain electrode will flow at a significantly lower level than the drain current when the target substance exists.

Meanwhile, a sample solution may refer to a solution diluted by body fluids such as saliva, sweat, blood, serum, or plasma, which are biological substances.

A sealer 410 may be disposed on the biosensor 400. The sealer 410 may be disposed at the sensor coupling portion 211. A flow path-forming portion 411 may be formed at the sealer 410. For example, the sealer 410 may be formed in the form of a rectangular prism, and the flow path-forming portion 411 may be in the form of a slit formed in the left-right direction.

In this configuration, the flow path-forming portion 411 may be disposed under the frame with the sensor coupling portion 211. In detail, the flow path-forming portion 411 may be disposed under the inlet port 631a and the outlet port 632a formed at the sensor coupling portion 211 and may be in fluid communication with the inlet port 631a and the outlet port 632a. According to this configuration, a buffer solution and a sample solution that have flowed through the first sensing channel 631 can flow into the flow path in the flow path-forming portion 411 through the inlet port 631a and can flow into the second sensing channel 632 through the outlet port 632a.

Further, the flow path-forming portion 411 may be disposed on the sensing portion of the biosensor 400. In this configuration, the sealer 410 may be formed to surround the outer periphery of the sensing portion. The sealer 410 seals the outer periphery of the flow path-forming portion 411, thereby being able to prevent a buffer solution and a sample solution flowing through the inside of the flow path-forming portion 411 from leaking to the outside.

The printed circuit board 500 may be detachably coupled to the frame 200. At least a portion of the biosensor 400 can be inserted into the upper housing 110 and can be detachably coupled to the substrate coupling portion 221 of the top frame 220. The printed circuit board 500 can be supported by the coupling guide portions 221a and the substrate supporting portions 221b.

In detail, the printed circuit board 500 may include a substrate body 510, a connector 520, and guide portions 530. For example, the substrate body 510 may be formed in the form of a substantially rectangular flat plate. A circuit may be mounted on the substrate body 510 and electrically connected with the biosensor 400.

Meanwhile, the connector 520 may be disposed at the front end of the substrate body 510. The connector 520 may be connected with the circuit on the substrate body 510. Accordingly, when the biosensor cartridge 1 is coupled to the diagnostic device 2, electric signals can be transmitted to the diagnostic device 2 through the connector 520. Further, when the biosensor cartridge 1 is coupled to the diagnostic device 2, power can be applied to the printed circuit board 500 and the biosensor 400 through the connector 520.

The guide portions 530 may be formed at both left and right ends of the substrate body 510, respectively, and may be coupled with the substrate supporting portions 221b of the substrate coupling portion 221. For example, the guide portions 530 may be recessed in the form of a curved surface on both left and right ends of the substrate body 510, respectively. Accordingly, it is possible to guide the accurate coupling position of the printed circuit board 500 through engagement with the protruding shape of the substrate supporting portions 221b, and it is possible to stably support the printed circuit board 500 in the state in which the printed circuit board 500 is coupled.

Meanwhile, the contact clips 450 may be disposed between the biosensor 400 and the printed circuit board 500. The contact clips 450 are coupled to the substrate coupling portion 221 and can be in contact with the printed circuit board 500 and the biosensor 400. Further, the contact clips 450 may be arranged to extend through the clip accommodation holes 221c, may be arranged to extend through the holes of the sensor coupling portion 211, and at least a portion thereof may be supported on the base frame 210.

The contact clips 450 may be provided as a plurality of contact clips. The contact clips 450 may be provided in an even number. In this case, the contact clips 450 may be arranged in a plurality of pairs side by side, with one pair symmetrically arranged at positions facing each other. For example, six contact clips 450 may be provided, with three pairs arranged side by side, and each pair may be symmetrically arranged at positions facing each other.

In detail, the contact clips 450 may be made of a conductive material. For example, the contact clips 450 may be made of a metal material. The contact clips 450 each may include a substrate contact portion 451, a sensor contact portion 452, and a connecting portion 453.

The substrate contact portion 451 may be arranged to extend through the clip accommodation hole 221c. In this configuration, the substrate contact portion 451 can be in contact with a terminal (not shown) provided at the printed circuit board 500. That is, the substrate contact portion 451 can be electrically connected with the circuit mounted on the printed circuit board 500. For example, the substrate contact portion 451 may be in the form of a plate extending in the front-rear direction.

The sensor contact portion 452 is arranged to extend through a hole formed at the sensor coupling portion 211 and can be in contact with a terminal (not shown) provided at the biosensor 400. That is, the sensor contact portion 452 can be electrically connected with the circuit mounted on the biosensor 400. For example, the sensor contact portion 452 may be in the form of a plate extending downward from the connecting portion 453 and then bending and extending upward.

In this configuration, the total height of the contact clip 450 in the vertical direction may be larger than the shortest distance between the biosensor 400 and the printed circuit board 500.

According to this configuration, when the sensor contact portion 452 comes into contact with the biosensor 400, the sensor contact portion 452 can press the biosensor 400 while elastically deforming, and the contact state can be firmly maintained while the contact area with the biosensor 400 is minimized.

The connecting portion 453 may be formed to connect the substrate contact portion 451 and the sensor contact portion 452. In this configuration, the connecting portion 453 may bend and extend downward from the substrate contact portion 451, then bend and extend in the front-rear direction, and bend and extend downward, whereby it can be connected with the sensor contact portion 452. The connecting portion 453 can be supported in contact with the base frame 210.

Therefore, when the contact clips 450 are seated on the frame 200, the upper side thereof can be in contact with the printed circuit board and the lower side can be in contact with the biosensor 400. Accordingly, it is possible to transmit electrical signals generated by the biosensor 400 to the printed circuit board through the shortest distance via the contact clips 450 even while allowing a buffer solution and a sample solution to flow between the printed circuit board 500 and the biosensor 400.

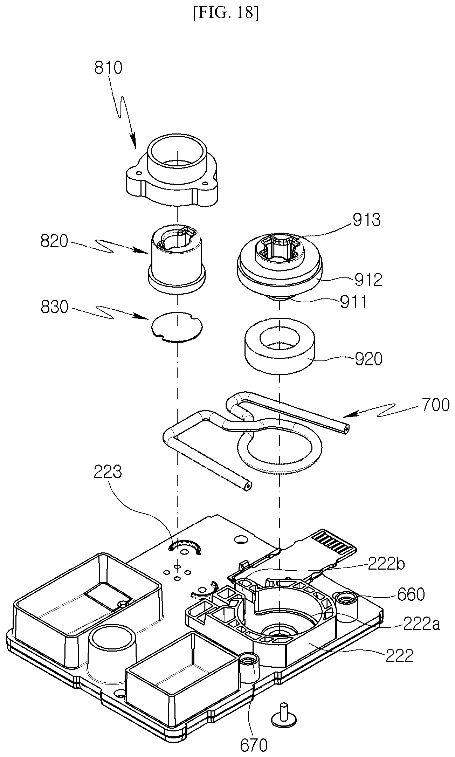

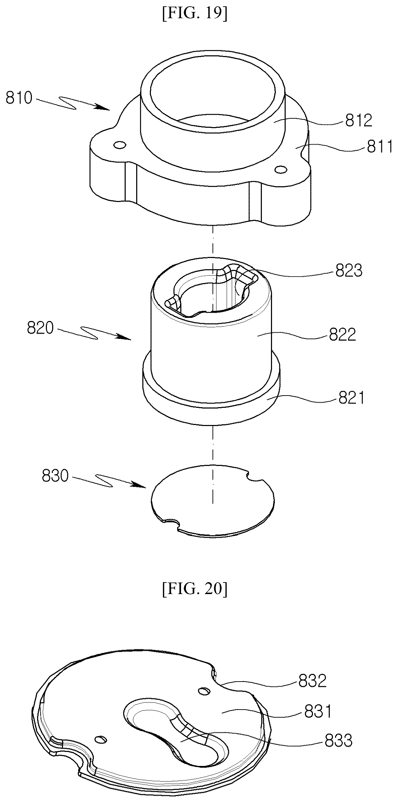

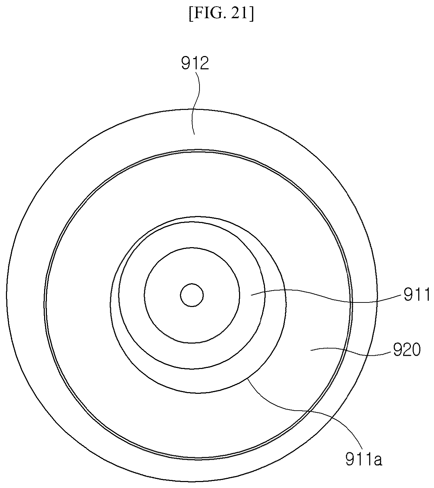

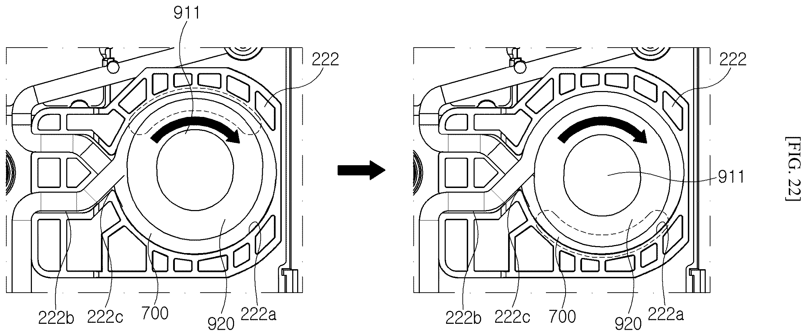

Meanwhile, FIG. 18 shows an exploded perspective view illustrating a valve unit and a pump unit in the biosensor cartridge according to an embodiment of the present disclosure, FIG. 19 shows an exploded perspective view illustrating the valve unit in the biosensor cartridge according to an embodiment of the present disclosure, FIG. 20 shows a perspective view illustrating a channel plate of the valve unit in the biosensor cartridge according to an embodiment of the present disclosure, FIG. 21 shows a bottom view illustrating the pump unit in the biosensor cartridge according to an embodiment of the present disclosure, and FIG. 22 shows a view illustrating a process in which a tube is compressed by rotation of the pump unit in the biosensor cartridge according to an embodiment of the present disclosure.

The tube 700, the valve unit 800, and the pump unit 900 of the biosensor cartridge 1 according to an embodiment of the present disclosure are described as follows with reference to FIG. 18 to FIG. 22.

The tube 700 may be in fluid communication with the channel 600 and a buffer solution or a sample solution can flow through the tube 700. The tube 700 is made of a flexible material and has a flow path therein through which fluid can flow.

A first end of the tube 700 may be coupled to the first tube connection port 660 and a second end of the tube 700 may be coupled to the second tube connection port 670. Accordingly, a first side of the tube 700 can be in fluid communication with the sensing channel 630 and a second side of the tube 700 can be in fluid communication with the waste solution channel 650. Accordingly, the tube 700 can receive a buffer solution or a sample solution that has passed through the sensing channel 630, and can discharge the buffer solution or the sample solution to the waste solution channel 650.

The tube 700 may be coupled to the tube accommodation portion 222. In detail, the tube 700 is disposed along the inner circumferential surface of the pump accommodation groove 221a, thereby being able to surround at least a portion of the pump knob 910. In this configuration, a portion of the tube 700 can be elastically deformed by being pressed between the pump knob 910 and the inner circumferential surface of the pump accommodation groove 221a. Accordingly, when the pump knob 910 is rotated, the tube 700 enables a buffer solution or a sample solution therein to flow while being circumferentially sequentially pressed. Further, when the buffer solution or the sample solution in the tube 700 flows, negative pressure is generated in the sensing channel 630 such that the buffer solution or the sample solution can flow into it. Further, a buffer solution or a sample solution is discharged to the waste solution channel 650, so the buffer solution or the sample solution can be discharged to the waste solution tank 330.

Meanwhile, in the structure in which fluid is made to flow by pressing a tube due to rotation of a pump in the related art, even though an inlet side and an outlet side are disposed close to each other, the tube is rapidly bent in the region right before the tube is circularly wound, and the inlet side and the outlet side are bent in opposite direction, so a region is formed where the pump fails to press the tube while rotating 360°.

In this case, the fluid flowing in the tube flows backward upon momentary restoration of the tube that had been pressed by the pump. Accordingly, there is a problem that backflow occurs in the entire flow path of fluid. In particular, in cases where the flow rate of a buffer solution or a sample solution must be maintained stably, such as a biosensor cartridge, there is a problem where errors may occur in the measurement values.

In order to solve this problem, in the present disclosure, the tube 700 is circumferentially disposed to surround the pump knob 910 such that the inlet side and the outlet side cross each other. In this case, any one of the inlet side and the outlet side of the tube 700 may be stacked on the other one. According to this configuration, the tube 700 can completely surround the pump knob 910 at least once and it is possible to backflow of a buffer solution or a sample solution during rotation of the pump knob 910.

In detail, the longitudinal first side and second side of the tube 700 can be accommodated in the tube guide grooves 222b, respectively. In this configuration, the tube guide grooves 222b may be formed such that the groove accommodating the first side of the tube 700 and the groove accommodating the second side of the tube 700 merge into a single groove to be in fluid communication with the pump accommodation groove 222a. Further, the first side and the second side of the tube 700 can be accommodated in a stacked state in the single merged groove of the tube guide grooves 222b.

Therefore, according to the present disclosure, the tube 700 can be wound at least one time round so that when the pump unit 900 is operated, the flow rate and the flow velocity of a buffer solution and/or a sample solution can be stably maintained.

The valve unit 800 may be rotatably coupled to the frame 200.

In detail, the valve unit 800 includes a valve housing 810, a valve knob 820, and a channel plate 830. In this configuration, at least a portion of the valve knob 820 may be rotatably accommodated in the valve housing 810 and the channel plate 830 may be coupled to the lower side of the valve knob 820.

The valve unit 800 may be coupled to the upper side of the top frame 220. In detail, the valve housing 810 may be coupled to the valve coupling portion 223. In this configuration, the valve housing 810 can be fixed to the frame 200 by coupling with fixing members such as screws. In this configuration, the fixing members may be coupled to the valve housing 810 through the base frame 210 and the top frame 220.

For example, the valve housing 810 may include a fixing portion 811 coupled to the upper side of the top frame 220 and a supporting portion 812 extending upward from the fixing portion. In this configuration, the fixing portion 811 is formed in the form of a hollow circular block and extends radially outward, whereby fixing member accommodation portions coupled to the fixing members can be formed. Further, the fixing portion 811 may have a knob accommodation hole having a predetermined inner diameter and formed at the center in the radial direction. On the other hand, the supporting portion 812 is formed in a cylindrical shape and the inner diameter of the supporting portion 812 may be smaller than the inner diameter of the knob accommodation hole of the fixing portion 811. That is, the inner circumferential surface of the valve housing 810 may be formed to have a step.

The valve knob 820 can be provided to rotate by an external force.

At least a portion of the valve knob 820 may be rotatably accommodated in the valve housing 810. For example, the valve knob 820 is formed in a cylindrical shape and the outer circumferential surface of the valve knob 820 may be formed to have a step. That is, the valve knob 820 may include a large-diameter section 821 and a small-diameter section 822, the outer diameter of the large-diameter section 821 may be larger than the outer diameter of the small-diameter section 822, and the large-diameter section 821 may be disposed under the small-diameter section 822. Further, the large-diameter section 821 may be accommodated in the fixing portion 811 of the valve housing and the small-diameter section 822 may be accommodated in the supporting portion 822 of the valve housing.

Accordingly, it is possible to prevent axial movement of the valve knob 820. As a result, axial (vertical) movement of the channel plate 830 disposed under the valve knob 820 is restricted, and the flow rate of a buffer solution or a sample solution flowing through the flow path formed on the channel plate 830 can be stably maintained.

Meanwhile, a knob groove 823 may be formed at the valve knob 820 such that an external force can be applied. The knob groove 823 can be coupled with a valve actuator 24 provided in the diagnostic device 2 when the biosensor cartridge 1 is coupled to the diagnostic device 2. In this configuration, when the knob groove 823 may be formed to be able to guide the initial position when the valve knob 820 is rotated. For example, the knob groove 823 may be formed with an irregular diameter. Accordingly, the knob groove 823 can be key-coupled with the valve actuator 24. This configuration can induce coupling at the accurate position of the knob groove 823 and the valve actuator 24.

Meanwhile, the channel plate 830 is coupled to the lower side of the valve knob 820 and can rotate along with rotation of the valve knob 820. In detail, the channel plate 830 may include a plate body 831 and coupling guide holes 832. For example, the plate body 831 may be formed in a disc shape and coupled to the lower end of the valve knob 820. In this configuration, at least one or more coupling protrusions (not shown) may be formed on the bottom surface of the valve knob 820. In addition, the coupling guide holes 832 may be formed at the plate body 831 at positions facing the coupling protrusions.

According to this configuration, when the coupling protrusions of the valve knob 820 and the coupling guide holes 832 are coupled, the valve knob 820 and the channel plate 830 can be rotated together. Further, there is an advantage that the position of a connecting channel 833 to be described below can be determined through the degree of rotation of the knob groove 823.

The connecting channel 833 may be formed on the channel plate 830. The connecting channel 833 is formed on the bottom surface of the channel plate 830 and can connect at least two ports formed on the top plate 220, depending on rotation of the channel plate 830. For example, the connecting channel 833 may be recessed in a shape similar to a dumbbell. Accordingly, a buffer solution or a sample solution can sufficiently flow inside and outside, and table flow rate and flow velocity can be provided.

The connecting channel 833 may be formed to connect at least two of the buffer solution port 615, the sample solution port 625, the sensing port 635, and the prefill port 645 with each other. For example, the connecting channel 833 may be formed as a single channel, and a first side thereof may be in fluid communication with the sensing channel 635 and a second side thereof may be brought into fluid communication with any one of the buffer solution port 615, the sample solution port 625, and the prefill port 645, depending on rotation of the channel plate 830. As another example, the connecting channel 833 may be formed as two channels such that they are in fluid communication with each of the buffer solution port 615, the sample solution port 625, the sensing port 635, and the prefill port 645 and the connected ports are changed, depending rotation of the channel plate 830.

Accordingly, by the connecting channel 833, the sensing port 635 can be brought into communication with any one of the buffer solution port 615, the sample solution port 625, and the prefill port 645, and when the pump unit 900 is operated, a buffer solution or a sample solution can flow into the sensing port 635.

Therefore, the valve knob 820 can open/close the channel 600 so that a buffer solution or a sample solution selectively flows to the biosensor 400, depending on rotation.

The pump unit 900 is rotatably coupled to the frame 200 and presses the tube 700 by rotating, thereby being able to generate a flow-driving force to a buffer solution or a sample solution flowing through the channel 600.

The pump unit 900 may include a pump knob 910 and a bearing 920.

The pump knob 910 may be disposed on the top surface of the top frame 220. The pump knob 910 may be rotatably coupled in the tube accommodation portion 222. The pump knob 910 may be rotatably accommodated in the pump accommodation groove 222a.

In detail, the pump knob 910 includes a shaft 911, a supporting portion 912, and a driving groove 913. The shaft 911 is formed in a cylindrical shape and provides a rotation axis for the pump knob 910. In this configuration, the shaft 911 is formed such that the radius from the rotation axis to the outer circumferential surface is irregular. That is, the shaft 911 may have a cam 911a at which the radius from the rotation axis is the largest. Accordingly, the shaft 911 has an outer circumferential surface in the form of a cam, so the position at which the tube 700 is pressed can be changed, depending on rotation of the shaft 911.

The supporting portion 912 may be disposed over the shaft 911 and may be disposed under the upper housing 110.

The supporting portion 912 may be formed in the form of a cylindrical block. The supporting portion 912 may be integrally formed with the shaft 911. Accordingly, the supporting portion 912 and the shaft 911 can rotate together.

The outer diameter of the supporting portion 912 may be larger than the maximum outer diameter of the shaft 911. In this configuration, the diameter of the supporting portion 912 may be larger than the diameter of the combined shaft 911, bearing 920 surrounding the outer circumferential surface of the shaft, and tube 700 surrounding the outer circumferential surface of the bearing 920. For example, the diameter of the supporting portion 912 may be the same as the pump accommodation groove 222a.

Accordingly, the supporting portion 912 can prevent the bearing 920 or the tube 700 from separating out of the pump accommodation groove 222a when the shaft 911 is rotated.

Further, the supporting portion 912 is supported in contact with the upper housing 110, so it can prevent the shaft 911 from shaking when an external rotational force is applied to the shaft 911.

The driving groove 913 may be disposed at the upper end of the supporting portion 912. The driving groove 913 may be formed such that an external force is applied. The driving groove 913 can be coupled with a pump actuator 25 provided in the diagnostic device 2 when the biosensor cartridge 1 is coupled to the diagnostic device 2. The driving groove 913 may be formed to correspond to the shape of the pump actuator 25. For example, the driving groove 913 may be formed in the form of a cross groove.

Accordingly, when the pump actuator 25 is rotated after being coupled to the driving groove 913, a rotational force can be applied to the pump knob 910.

The bearing 920 can surround the outer circumferential surface of the shaft 911. The bearing 920 can come into contact with the tube 700 when the shaft 911 is rotated. Accordingly, it is possible to prevent friction of the shaft 911 with the tube 700.

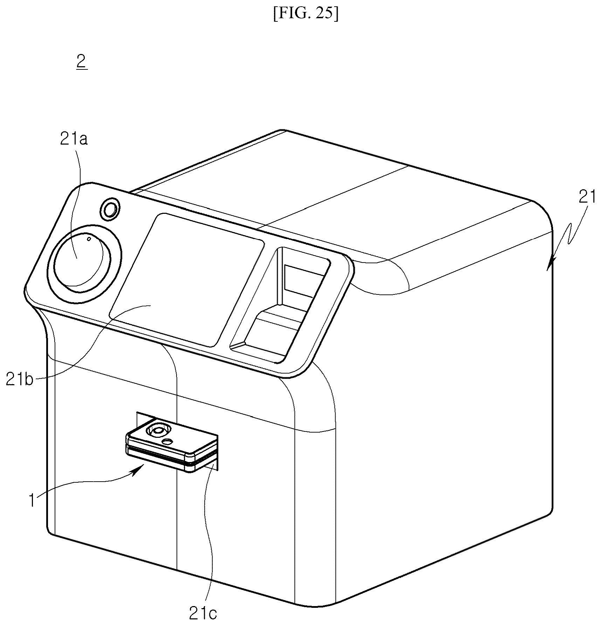

Meanwhile, FIG. 25 to FIG. 18 show views illustrating the configuration of a diagnostic device according to an embodiment of the present disclosure.

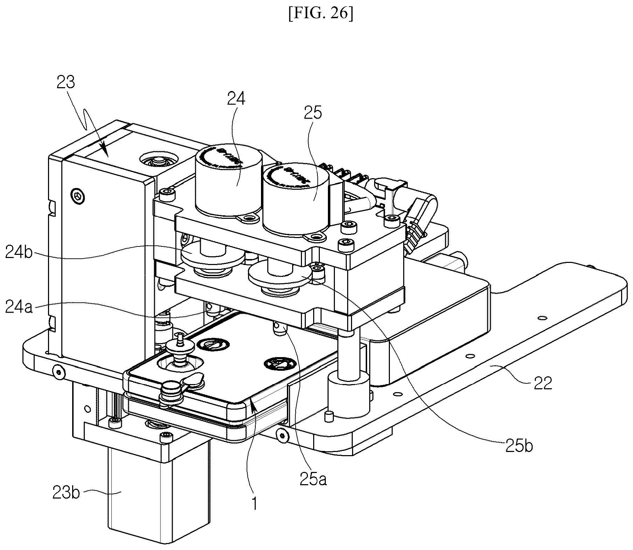

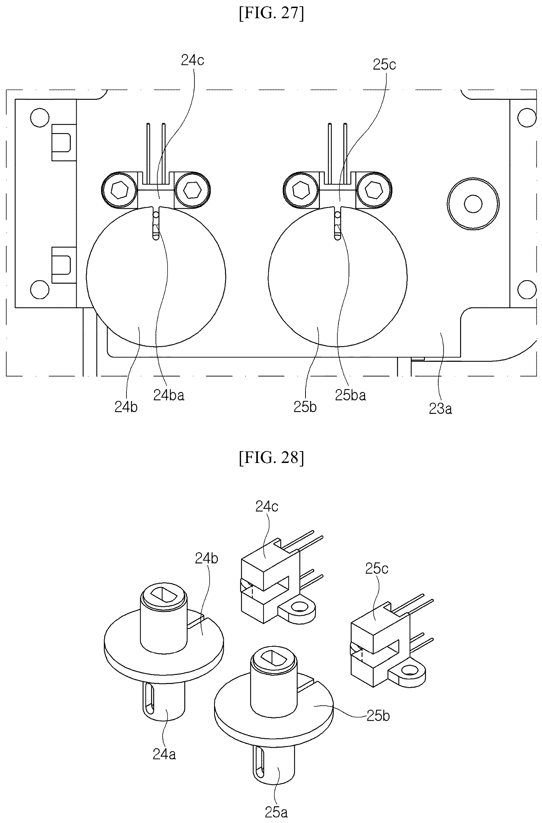

The diagnostic device 2 is described as follows with reference to FIG. 25 to FIG. 28. The diagnostic device 2 may be a diagnostic device for a biosensor.

When the biosensor cartridge 1 is coupled, the diagnostic device 2 drives the valve unit 800 and the pump unit 900 of the biosensor cartridge 1 and receives an electrical signal generated by the biosensor 400, thereby being able to diagnose whether a bio-substance is present.

The diagnostic device 2 can sense a current change related to the presence of a small amount of target material from the biosensor cartridge 1, diagnose a disease accordingly, and transmit the result to a user.

The diagnostic device 2 may include a function of compensating for the reproducibility and nonuniformity of the sensor, including a preprocessing process of correcting a sensing signal from the biosensor cartridge 1 to make fine signal changes readable.

The diagnostic device 2 may include a QR reader that reads a QR code displayed on the biosensor cartridge 1 and receives environmental information for genuine product certification of the biosensor cartridge 1, and a communication module that can transmit and receive signals for genuine product certification with an external cloud server.

The diagnostic device 2 may have a program algorithm or an application installed for diagnosing diseases by measuring and analyzing sensing signals from the biosensor cartridge 1, and different algorithms may be executed depending on the type of each biosensor cartridge 1.

The diagnostic device 2 may include a diagnostic device housing 21, a driving unit frame 22, a loading unit 23, a valve actuator 24, a pump actuator 25, and a diagnostic device control unit 26.

The diagnostic device housing 21 may form the external appearance of the diagnostic device 2. The diagnostic device housing 21 can accommodate the driving unit frame 22, the loading unit 23, the valve actuator 24, the pump actuator 25, and the diagnostic device control unit 26 therein.

The diagnostic device housing 21 may be equipped with an operating part 21a, a display 21b, and cartridge insertion port 21c. The operating part 21a may be provided so that user can operate it. For example, the operating part 21a may be a dial. Further, the display 21b can display the operation situation of the diagnostic device 2 and can display a diagnosis result. Meanwhile, depending on embodiments, the display 21b may be a touch screen. In this case, a user can input commands through the display 21b. In this configuration, the operating part 21a and the display 21b may be disposed at the upper portion of the diagnostic device housing 21. Accordingly, a user can easily operate the diagnostic device.

The cartridge insertion port 21c is formed on the diagnostic device housing 21 and the biosensor cartridge 1 can be inserted into it. In this configuration, the cartridge insertion port 21c may be formed such that the width in the horizontal direction is larger than the height in the vertical direction. That is, the biosensor cartridge 1 can be arranged in the horizontal direction and then inserted. Accordingly, a buffer solution or a sample solution flowing in the biosensor cartridge 1 can stably flow.

Meanwhile, the driving unit frame 22 is disposed in the diagnostic device housing 21 and can support the loading unit 23, the valve actuator 24, and the pump actuator 25. The driving unit frame 22 can be coupled to and supported by the diagnostic device housing 21.

The loading unit 23 is coupled with the valve actuator 24 and the pump actuator 25 and can move up and down the valve actuator 24 and the pump actuator 25. In detail, the loading unit 23 may include a loading plate 23a and a loading actuator 23b. The valve actuator 24 and the pump actuator 25 may be coupled to the loading plate 23a. Further, the loading plate 23a is connected to the loading actuator 23b by gears, etc., and can be moved up or down by the operation of the loading actuator 23b.

Meanwhile, the valve actuator 24 may be coupled with the valve unit 800. In detail, the valve actuator 24 is coupled with the valve knob 820 and can rotate the valve knob 820.

The valve actuator 24 may be connected with an actuator shaft 24a. For example, the valve actuator 24 may include a valve motor 24d, may be connected with the actuator shaft 24a through a gear connected with the valve motor 24d, and can rotate the actuator shaft 24a through the operation of the valve motor 24d.

The actuator shaft 24a may be coupled to the knob groove 823 of the valve knob 820. The actuator shaft 24a can be coupled to the knob groove 823 of the valve knob 820 when the loading plate 23a is moved down.

In this configuration, a key frame 24ab may be coupled to the actuator shaft 24a. The key frame 24ab may be disposed in a direction crossing the longitudinal direction of the actuator shaft 24a. For example, the key frame 24ab may be formed in a cylindrical shape, disposed in a direction crossing the longitudinal direction of the actuator shaft 24a, and arranged to extend through the actuator shaft 24a. According to this configuration, when the actuator shaft 24a is moved down, the key frame 24ab can be coupled to the knob groove 823. Further, when the actuator shaft 24a is rotated with the key frame 24ab coupled to the knob groove 823, the valve knob 820 can be rotated in conjunction therewith.

The actuator shaft 24a may be formed in a cylindrical shape, may accommodate a spring therein, and the key frame 24ab may be disposed at the lower end of the spring.

Accordingly, when the loading plate 23a is moved down and the key frame 24ab is not accommodated into the knob groove 823, the spring is compressed and the key frame 24ab can remain in contact with the upper end of the valve knob 820. In this state, when the actuator shaft 24a is rotated, the key frame 24ab is rotated with the actuator shaft 24a, and when the key frame 24ab is positioned directly over the knob groove 823, the key frame 24ab can be fitted into the knob groove 823 by the elasticity of the spring. Thereafter, when the actuator shaft 24a is rotated, the valve knob 820 can be rotated in conjunction therewith.

Meanwhile, the actuator shaft 24a may have an alignment guide portion 24b. For example, the alignment guide portion 24b may be formed in a disc shape and the actuator shaft 24a may pass through the alignment guide portion 24b. A guide slit 24ba may be formed at the alignment guide portion 24b. The guide slit 24ba may be formed in the radial direction.

The alignment guide portion 24b allows the home position of the actuator shaft 24a to be sensed by an alignment sensing unit 24c. In this configuration, the alignment sensing unit 24c can sense the home position of the actuator shaft 24a by sensing the guide slit 24ba. For example, the alignment sensing unit 24c may be a photo interrupter. That is, the alignment sensing unit 24c may include a light source and a light receiving unit, and any one of the light source and the light receiving unit may be disposed over the alignment guide portion 24b and the other one may be disposed under the alignment guide portion 24b. Accordingly, when the guide slit 24ba is positioned between the light source and the light receiving unit, it can be sensed that the actuator shaft 24a is in the home position.

Meanwhile, the pump actuator 25 may be coupled with the pump unit 900. For example, the pump actuator 25 may include a pump motor 25d, may be connected with the actuator shaft 25a through a gear connected with the pump motor 25d, and can rotate the actuator shaft 25a through the operation of the pump motor 25d.

The pump actuator 25 may be connected with the actuator shaft 25a. The pump actuator 25 is connected with the actuator shaft 25a through gears and can rotate the actuator shaft 25a.

The actuator shaft 25a may be coupled to the driving groove 913 of the pump knob 910. The actuator shaft 25a can be coupled to the driving groove 913 of the pump knob 910 when the loading plate 23a is moved down.

In this configuration, a key frame (not shown) may be coupled to the actuator shaft 25a. Further, the actuator shaft 25a may have an alignment guide portion 25b. Further, the actuator shaft 25a may have an alignment sensing unit 25c.

Meanwhile, in order to avoid redundant descriptions, the key frame, the alignment guide portion 25b, and the alignment sensing unit 25c of the pump actuator 25 may be incorporated by reference since they have the same structure and function as the key frame 24ab, alignment guide portion 24b, and alignment sensing unit 24c of the pump actuator 24.

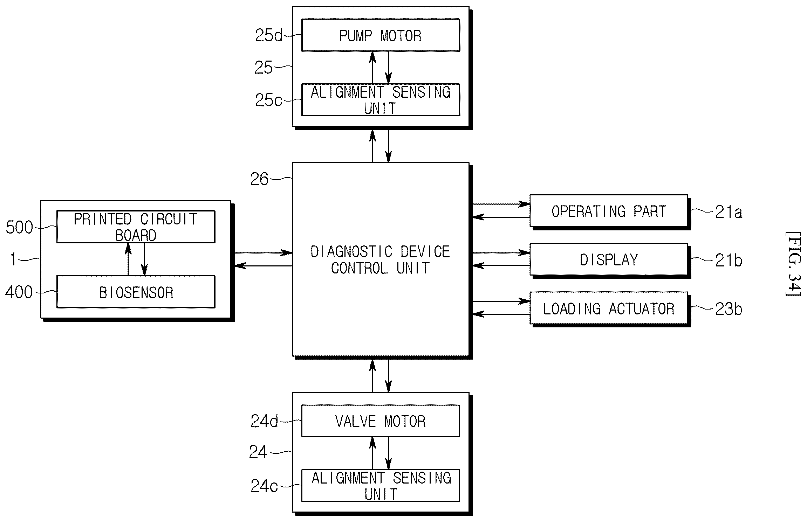

The control relationship between the biosensor cartridge 1 of the present disclosure and the diagnostic device 2 is described as follows with reference to FIG. 34.

The diagnostic device control unit 26 may be disposed in the diagnostic device housing 21.

The diagnostic device control unit 26 may be composed of a printed circuit board and devices mounted on the printed circuit board.

Though not shown, the diagnostic device control unit 26 may include a memory and a timer. Accordingly, preset data can be stored and control commands can be executed for a set time.

The diagnostic device control unit 26 can control the loading actuator 23b. The diagnostic device control unit 26 can move up or down the loading unit 23 by controlling the loading actuator 23b.

Meanwhile, the diagnostic device control unit 26 can control the valve actuator 24. Further, the diagnostic device control unit 26 can rotate the actuator shaft 24a by controlling the valve actuator 24. In this case, the diagnostic device control unit 26 can control the rotation angle of the actuator shaft 24a For example, the diagnostic device control unit 26 can control rotation of the valve motor 24d through an encoder, whereby it can control the rotation angle of the actuator shaft 24a. Therefore, the diagnostic device control unit 26 can rotate the connecting channel 833 of the valve unit 800 to accurate positions and can accurately switch the channel 600 to be connected.

Further, the diagnostic device control unit 26 is signal-connected with the alignment sensing unit 24c, so it can sense whether the actuator shaft 24a is in the home position. Accordingly, the diagnostic device control unit 26 can rotate the actuator shaft 24a to the home position by controlling the valve motor 24d.

Meanwhile, the diagnostic device control unit 26 can control the pump actuator 25. The diagnostic device control unit 26 can rotate the actuator shaft 25a by controlling the pump actuator 25. In this case, the diagnostic device control unit 26 can control the rotation velocity of the actuator shaft 25a For example, the diagnostic device control unit 26 can control the rotation velocity of the pump motor 25d through an encoder, whereby it can control the rotation velocity of the actuator shaft 25a. Accordingly, the diagnostic device control unit 26 can control the flow velocity of a buffer solution and a sample solution, which flow through the channel 600 and the tube 700, by controlling the rotation velocity of the pump unit 900.

Further, the diagnostic device control unit 26 is signal-connected with the alignment sensing unit 25c, so it can sense whether the actuator shaft 25a is in the home position. Accordingly, the diagnostic device control unit 26 can rotate the actuator shaft 25a to the home position by controlling the pump motor 25d.

Further, the diagnostic device control unit 26 may be signal-connected with the operating part 21a and the display 21b. When a user's command is input, the diagnostic device control unit 26 can receive the user's command from the operating part 21a. Further, the diagnostic device control unit 26 can transmit information to the display 21b. Accordingly, it is possible to display the current status of the diagnostic device 2.

Further, the diagnostic device control unit 26 may be electrically connected with the biosensor cartridge 1. In detail, the diagnostic device control unit 26 may be electrically connected with the printed circuit board 500 of the biosensor cartridge 1. The diagnostic device control unit 26 can sense whether a bio-substance is present by receiving an electrical signal from the printed circuit board 500. Further, it is possible to determine the types of bio-substances on the basis of pre-stored data.

Though not shown, the diagnostic device control unit 26 may include a communication unit. The diagnostic device control unit 26 can communicate with a terminal (not shown) through the communication unit. The communication unit can support wireless communication with other devices outside the diagnostic device 2, including the terminal (not shown). As a wireless communication module for supporting wireless communication, a short-range communication module or a long-range communication module may be provided. Accordingly, it is possible to transmit the status of the diagnostic device 2 diagnosis result of bio-substances to a user, and it is possible to remotely receive control commands from a user.

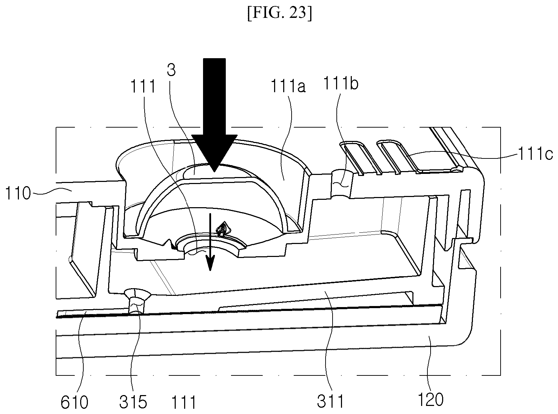

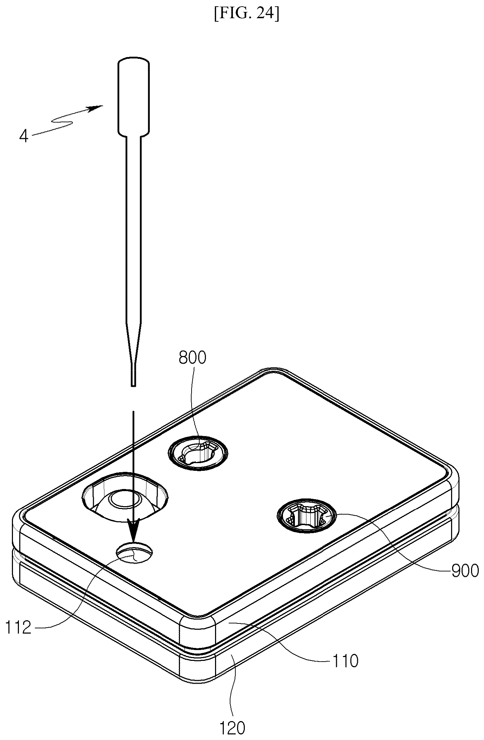

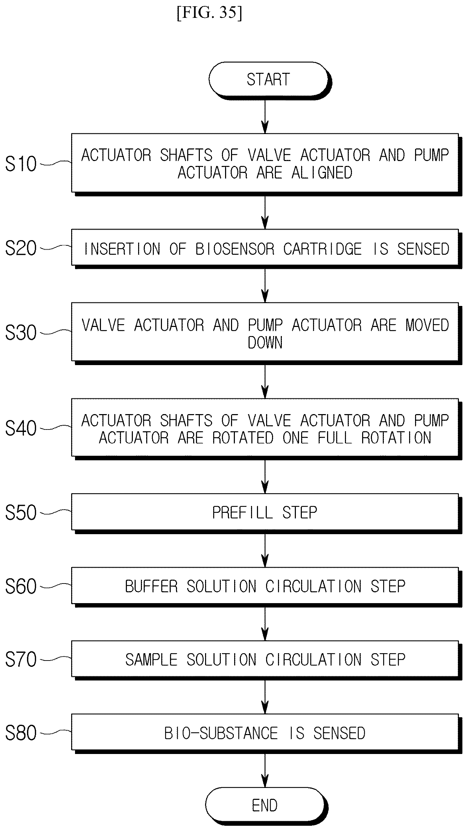

Meanwhile, FIG. 23 to FIG. 35 show views illustrating a process of diagnosing a sample solution introduced in a biosensor cartridge using a diagnostic device according to an embodiment of the present disclosure.

The process of diagnosing a sample solution introduced in a biosensor cartridge using a diagnostic device according to an embodiment of the present disclosure is described as follows with reference to FIG. 23 to FIG. 35.

The biosensor 400 and the printed circuit board 500 may have been coupled to the biosensor cartridge 1. However, when there is an error with the biosensor 400 and the printed circuit board 500, a user can replace them.

A user can inject a buffer solution into the biosensor cartridge 1. In detail, a user can inject a buffer solution into the buffer solution introduction hole 111. In this case, it is possible to inject a buffer solution into the buffer solution introduction hole 111 using a buffer blister 3.

For example, the buffer blister 3 may have an upper portion formed in a circular dome shape and a lower portion formed in a flat shape. In this configuration, the upper portion of the buffer blister 3 may be deformable material and the lower surface of the buffer blister 3 may be made of a material that can be torn.

The buffer blister 3 may be accommodated in the blister accommodation groove 111a. In this configuration, the buffer blister 3 may not only be fixedly provided in the blister accommodation groove 111a, but may also be detachably coupled to the blister accommodation groove 111a.

Accordingly, a user can put the buffer blister 3 into the blister accommodation groove 111a and then press down the buffer blister 3 using fingers, etc. In this case, the dome-shaped upper portion of the buffer blister 3 is deformed downward and the internal pressure of the buffer blister 3 can be increased. In addition, the blister punch 111d protruding from the blister accommodation groove 111a can puncture and burst the lower surface of the buffer blister 3. Accordingly, the buffer solution stored in the buffer blister 3 flows down by gravity and can flow into the buffer solution introduction hole 111 (see FIG. 23).

Further, the buffer solution that has passed through the buffer solution introduction hole 111 can be accommodated into the buffer solution tank 310. Further, the buffer solution can flow into the buffer solution inlet port 315 along the inclined surface 311. Further, a portion of the buffer solution accommodated in the buffer solution tank 310 can flow along the buffer solution channel 610. However, without operation of the pump unit 900, the buffer solution may be in a state in which it has not flowed to the sensing channel 630.

Meanwhile, a user can inject a sample solution into the sample solution introduction hole 112. In this case, the user can inject a sample solution into the sample solution introduction hole 112 using a sample injection tool 4, including a dropper.

Meanwhile, a buffer solution and a sample solution may be simultaneously injected, a buffer solution may be injected after a sample solution is injected, and a sample solution may be injected after a buffer solution is injected.

The sample solution that has passed through the sample solution introduction hole 112 can be accommodated into the sample solution tank 320. Further, a portion of the sample solution accommodated in the sample solution tank 320 can flow along the sample solution channel 620. However, without operation of the pump unit 90, the sample solution may be in a state in which it has not flowed to the sensing channel 630.

As a result, after a buffer solution and a sample solution are injected, a user can insert the biosensor cartridge 1 into the diagnostic device 2.

Meanwhile, before the biosensor cartridge 1 into the diagnostic device 2, the diagnostic device control unit 26 can check whether the actuator shafts 24a and 25a of the valve actuator 24 and the pump actuator 25a have been aligned at their initial positions (home positions). That is, the diagnostic device control unit 26 can operate the alignment sensing units 24c and 25c, and can sense whether the guide slits 24ba and 25ba are in the initial positions through the alignment sensing units 24c and 25c.

When a user inserts the biosensor cartridge 1 into the cartridge insertion port 21c formed at the diagnostic device 2, the valve knob 820 can be positioned directly under the actuator shaft 24a of the valve actuator 24 and the pump knob 910 can be positioned directly under the actuator shaft 25a of the pump actuator 25.

Further, though not shown, when the biosensor cartridge 1 is inserted into the diagnostic device 2, the printed circuit board 500 can be electrically connected with a terminal in the diagnostic device 2. Further, power can be applied to the printed circuit board 500 and the biosensor 400. Further, the diagnostic device control unit 26 can sense an electrical signal that is received from the printed circuit board 500. Accordingly, when power is applied to the printed circuit board 500 from the diagnostic device 2, the diagnostic device control unit 26 can sense that the biosensor cartridge 1 is coupled (S20).

Meanwhile, though not shown, the diagnostic device 2 may further include a coupling sensing unit, which is a contact sensor such as a micro switch or a non-contact sensor such as an IR sensor, and the diagnostic device control unit 26 can also sense that the biosensor cartridge 1 is coupled, through the coupling sensing unit.

When sensing that the biosensor cartridge 1 has been inserted in the diagnostic device 2, the diagnostic device control unit 26 can operate the loading actuator 23b. The diagnostic device control unit 26 can move down the loading plate 23a by controlling the loading actuator 23b (S30). Accordingly, the valve actuator 24 and the pump actuator 25 can be moved down. Accordingly, the actuator shaft 24a of the valve actuator 24 can be coupled with the valve knob 820 and the actuator shaft 25a of the pump actuator 25 can be coupled with the pump knob 910.

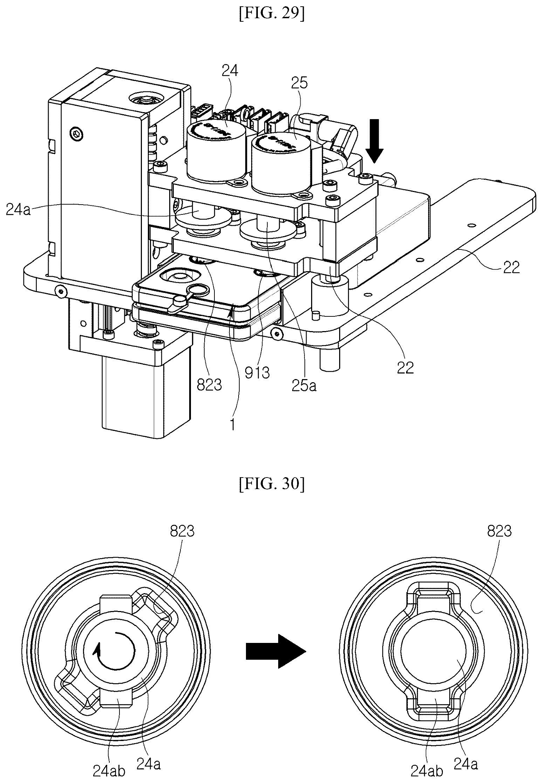

Meanwhile, the diagnostic device control unit 26 stops the operation of the loading actuator 23b and then operates the valve actuator 24 and/or the pump actuator 25, thereby being able to rotate the actuator shafts 24a and 25a by one full rotation. That is, the actuator shaft 24a of the valve actuator 24 and/or the actuator shaft 25a of the pump actuator 25 can be rotated 360°. Accordingly, even though the key frame 24ab of the actuator shafts 24a and 25a is not accommodated in the knob groove 823 or the driving groove 913 in the initial state, the key frame 24ab can be coupled to the knob groove 823 or the driving groove 913 while the actuator shafts 24a and 25a are rotated one full rotation (see FIG. 30). Accordingly, in the following processes, it is possible to align the knob groove 823 or the driving groove 913 to the home positions and it is possible to precisely control the valve unit 800 and the pump unit 900 by controlling the valve actuator 24 and/or the pump actuator 25.

Thereafter, the diagnostic device control unit 26 can sense a bio-substrate by receiving an electric signal from the biosensor 400 while driving the valve actuator 24 and the pump actuator 25.

First, the diagnostic device control unit 26 can perform a prefill step S50.

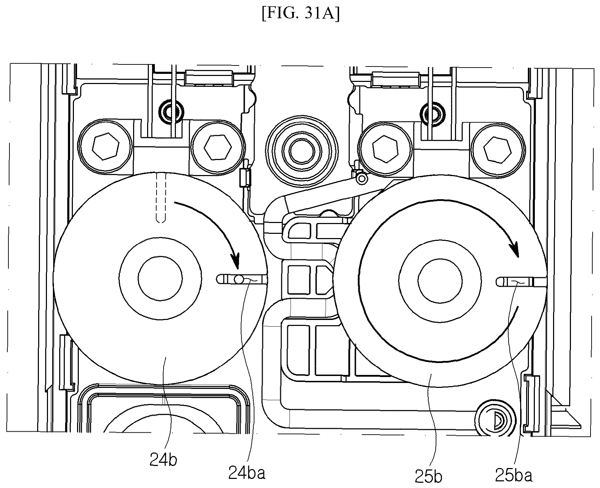

In the prefill step S50, the diagnostic device control unit 26 can bring the prefill port 645 and the sensing port 635 into fluid communication with each other by operating the valve actuator 24. In this case, the diagnostic device control unit 26 can control the valve actuator 24 to position the connecting channel 833 at a preset first position (see FIG. 31A).

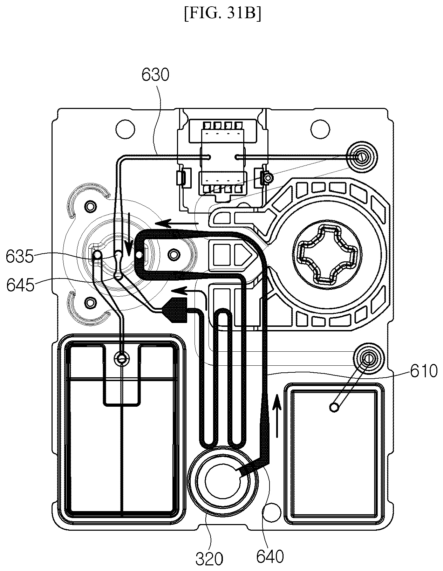

Further, the diagnostic device control unit 26 can operate the pump actuator 25 with the prefill port 645 and the sensing port 635 in fluid communication with each other. In this case, the diagnostic device control unit 26 can operate the pump actuator 25 for a preset time. Accordingly, the sample solution accommodated in the sample solution tank 320 can pass through the sample solution channel 620 and then flow into the prefill channel 640 (see FIG. 31B). Therefore, it is possible to achieve a state where the sample solution channel 620 is completely filled with the sample solution, and it is possible to discharge bubbles to the prefill channel 640.

Thereafter, the diagnostic device control unit 26 can perform a buffer solution circulation step S60.

In the buffer solution circulation step S60, the diagnostic device control unit 26 can bring the buffer solution port 615 and the sensing port 635 into fluid communication with each other by operating the valve actuator 24.

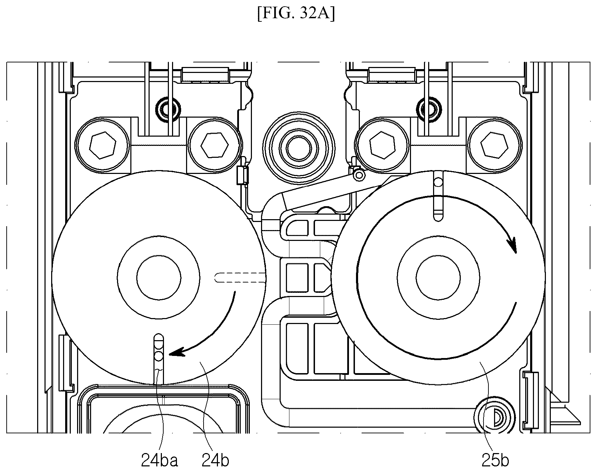

To this end, the diagnostic device control unit 26 can control the valve actuator 24 to position the connecting channel 833 at a preset second position (see FIG. 32A).

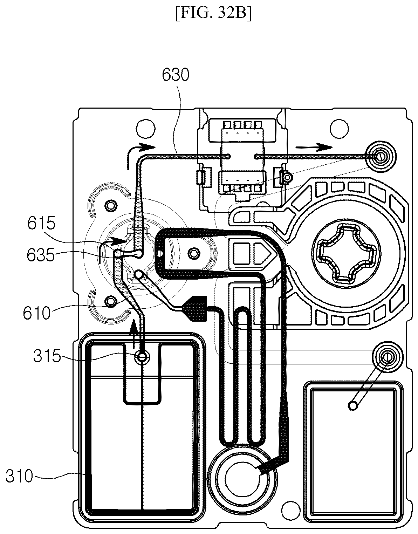

Further, the diagnostic device control unit 26 can operate the pump actuator 25 with the buffer solution port 615 and the sensing port 635 in fluid communication with each other. In this case, the diagnostic device control unit 26 can operate the pump actuator 25 for a preset time. Accordingly, the buffer solution accommodated in the buffer solution tank 310 can pass through the buffer solution channel 610 and then flow through the sensing channel 630 (see FIG. 32B).

However, depending on embodiments, the pump actuator 25 may be stopped while the valve actuator 24 is operated. This is for preventing air bubbles from entering the sensing channel 630 or a buffer solution or a sample solution from leaking due to operation of the pump unit 900 operates while the valve unit 800 switches the channel 600 to be connected.

In this case, the diagnostic device control unit 26 can sense an electrical signal that is received through the printed circuit board 500. Accordingly, the diagnostic device control unit 26 can determine whether there is an error in the printed circuit board 500 and/or the biosensor 400.

Thereafter, the diagnostic device control unit 26 can perform a sample solution circulation step S70.

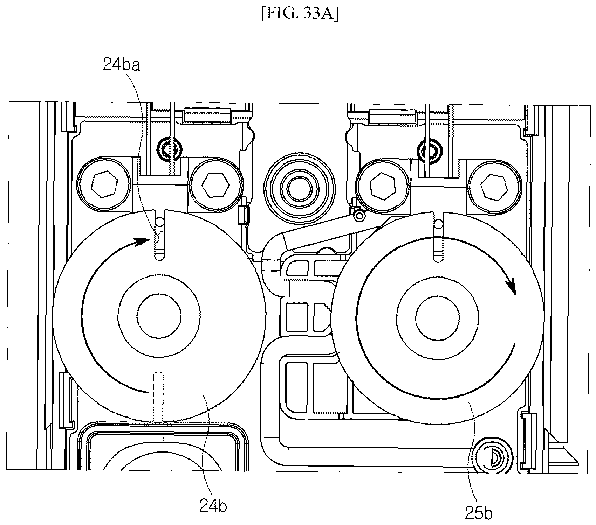

In the sample solution circulation step S70, the diagnostic device control unit 26 can bring the sample solution port 625 and the sensing port 635 into fluid communication with each other by operating the valve actuator 24. In this case, the diagnostic device control unit 26 can control the valve actuator 24 to position the connecting channel 833 at a preset third position (see FIG. 33A).

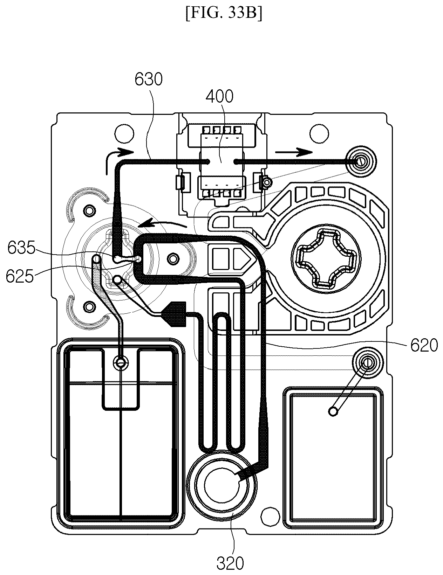

Further, the diagnostic device control unit 26 can operate the pump actuator 25 with the sample solution port 625 and the sensing port 635 in fluid communication with each other. In this case, the diagnostic device control unit 26 can operate the pump actuator 25 for a preset time. Accordingly, the sample solution accommodated in the sample solution tank 320 can pass through the sample solution channel 620 and then flow through the sensing channel 630 (see FIG. 33B).

In this case, the diagnostic device control unit 26 can sense an electrical signal that is received through the printed circuit board 500 (S80). Further, the diagnostic device control unit 26 can determine whether a bio-substance is present by comparing the electrical signal value in the buffer solution circulation step S60 and the electrical signal value in the sample solution circulation step S70.

Thereafter, the diagnostic device control unit 26 display whether a bio-substance is present through the display 21b.

Further, the diagnostic device control unit 26 can bring the buffer solution port 615 and the sensing port 635 into fluid communication with each other by operating the valve actuator 24. In this case, the diagnostic device control unit 26 can control the valve actuator 24 to position the connecting channel 833 at the preset first position.

Further, the diagnostic device control unit 26 can operate the pump actuator 25 with the buffer solution port 615 and the sensing port 635 in fluid communication with each other. In this case, the diagnostic device control unit 26 can operate the pump actuator 25 for a preset time. Accordingly, the buffer solution accommodated in the buffer solution tank 320 can flow to the waste solution tank 330 through the buffer solution channel 610, the sensing channel 630, and the tube 700. In this process, the buffer solution can flush the channel 600 and the tube 700.

Accordingly, there is an advantage that it is possible to naturally flush the channels formed in the biosensor cartridge 1 and it is possible to reuse some components of the biosensor cartridge 1.

Thereafter, when the operation of the pump actuator 25 is finished, the diagnostic device control unit 26 can operate the loading actuator 23b. The diagnostic device control unit 26 can move up the loading plate 23a by controlling the loading actuator 23b. Accordingly, the valve actuator 24 and the pump actuator 25 can be moved up. Therefore, the actuator shafts 24a and 25a can be separated from the valve knob 820 and the pump knob 910.

Thereafter, the diagnostic device control unit 26 can inform a user that the diagnosis on the corresponding biosensor cartridge 1 has been completed through the display 21b, etc.

Thereafter, the user can separate the biosensor cartridge 1 inserted in the diagnostic device 2 by pulling it.

Although the present disclosure was described in detail with reference to detailed embodiments, the embodiments are provided only to describe the present disclosure in detail and the present disclosure is not limited to the embodiments. Further, it is apparent that the present disclosure may be changed and improved by those skilled in the art without departing from the spirit of the present disclosure.

Simple changes and modifications of the present disclosure are included in the range of the present disclosure and the detailed protection range of the present disclosure will be made clear by claims.

## Claims

1. A biosensor system comprising:
a biosensor cartridge (1) comprising a frame (200) disposed in a housing (100), a channel (600) formed in the frame (200) and configured to provide a path for flow of a buffer solution or a sample solution, a biosensor (400) coupled to the frame (200) and configured to detect a bio-substance, and a pump unit (900) configured to generate a flow-driving force to the buffer solution or the sample solution flowing in the channel (600); and
a diagnostic device (2) comprising a diagnostic device housing (21) having a cartridge insertion port (21c) into which the biosensor cartridge (1) is inserted, and a pump actuator (25) disposed in the diagnostic device housing (21), coupled to the pump unit (900), and configured to rotate the pump unit (900).

2. The biosensor system of claim 1, wherein when the biosensor cartridge (1) is inserted into the diagnostic device(2), the pump actuator(25) is moved down and coupled with the pump unit(900).

3. The biosensor system of claim 1, or 2, wherein the biosensor cartridge (1) further comprises a valve unit(800) configured to allow the buffer solution or the sample solution to flow to the biosensor(400) by selectively opening or closing a buffer solution channel(610) into which the buffer solution flows and a sample solution channel(620) into which the sample solution flows.

4. The biosensor system of claim 3, wherein the diagnostic device (2) further comprises a valve actuator(24) coupled to a valve knob(820) of the valve unit(800) and configured to rotate the valve knob(820).

5. The biosensor system of claim 4, wherein when the biosensor cartridge (1) is inserted into the diagnostic device(2), the valve actuator(24) is moved down and coupled with the valve unit(800).

6. The biosensor system of any one of claims 1 to 5, wherein the pump actuator (25) comprises:
an actuator shaft(25a) coupled to the pump unit (900) and configured to rotate the pump unit(900);
an alignment guide portion(25b) having a larger diameter than the actuator shaft(25a), having a guide slit(25ba), and integrally rotating with the actuator shaft(25a); and
an alignment sensing unit(25c) configured to sense a position of the guide slit(25ba) when the alignment guide portion(25b) is rotated, and
wherein the pump actuator (25) arranges the alignment sensing unit(25c) and the guide slit(25ba) on a vertical line by rotating the actuator shaft(25a) before the biosensor cartridge(1) is inserted into the diagnostic device(2).

7. The biosensor system of any one of claims 1 to 6, the biosensor cartridge (1) further comprising a valve unit (800) configured to allow the buffer solution or the sample solution to flow to the biosensor(400) by selectively opening or closing the channel(600); and
the diagnostic device(2) further comprising a valve actuator(24) disposed in the diagnostic device housing(21), coupled to the valve unit(800), and configured to rotate the valve unit(800),
wherein the channel(600) comprises:
a buffer solution channel(610) into which the buffer solution flows;
a sample solution channel(620) into which the sample solution flows; and
a sensing channel(630) configured to guide the buffer solution or the sample solution to the biosensor(400), and
the valve unit(800) brings the buffer solution channel(610) and the sensing channel (630) into fluid communication with each other and then brings the sample solution channel(620) and the sensing channel(630) into fluid communication with each other.

8. The biosensor system of claim 7, wherein the channel(600) further comprises a prefill channel(640) that is in fluid communication with the sample solution(620) channel and through which the sample solution flows.

9. The biosensor system of claim 8, wherein the valve unit(800) brings the prefill channel(640) and the sensing channel(630) into fluid communication with each other and then brings the buffer solution channel(610) and the sensing channel(630) into fluid communication with each other.

10. The biosensor system of any one of claims 7 to 9, wherein the biosensor cartridge(1) further comprises a pump unit(900) configured to generate a flow-driving force to the buffer solution or the sample solution flowing in the channel(600).

11. The biosensor system of claim 10, wherein the diagnostic device(2) further comprises a pump actuator(25) disposed in the diagnostic device housing(21), coupled to the pump unit(900), and configured to rotate the pump unit(900); and
the pump actuator(25) is operated when rotation of the valve unit(800) is stopped.

12. The biosensor system of any one of claims 7 to 11, wherein when the biosensor cartridge(1) is inserted into the diagnostic device(2), the valve actuator(24) is moved down and coupled with the valve unit(800).

13. The biosensor system of claim 12, wherein the valve actuator(24) comprises an actuator shaft(24a) coupled with the valve unit(800) and configured to rotate the valve unit(800), and
the actuator shaft(24a) is rotated one full rotation after the valve actuator(24) is moved down.

14. A method of controlling a biosensor system comprising a diagnostic device to which a biosensor cartridge(1) comprising a biosensor(400) is coupled and that senses a bio-substance contained in a sample solution introduced in the biosensor cartridge(1), the method comprising:
a shaft alignment step of aligning an actuator shaft(24a) of a valve actuator(24), which rotates a valve unit(800) provided in the biosensor cartridge(1), and an actuator shaft(25a) of a pump actuator(25), which rotates a pump unit(900), to initial positions;
a loading step of moving down the valve actuator (24) and the pump actuator (25) when the biosensor cartridge(1) is inserted; and
a diagnosing step of sensing the bio-substance by rotating the valve unit (800) and the pump unit(900).

15. The method of claim 14, wherein the diagnosing step comprises:
a prefill step of rotating a connecting channel formed at the valve unit (800) to a first position by operating the valve actuator(24);
a buffer solution circulation step of rotating the connecting channel to a second position, which is different from the first position, by operating the valve actuator (24) after the prefill step; and
a sample solution circulation step of rotating the connecting channel to a third position, which is different from the first position and the second position, by operating the valve actuator (24) after the buffer solution circulation step.
